# EUROPEAN PATENT APPLICATION

(11) **EP 4 694 249 A1**
(43) Date of publication of application: **11.02.2026**
(21) Application number: 24193617.8
(22) Date of filing: 08.08.2024
(51) Int. Cl.: H04W 12/02, H04L 67/12, H04W 8/26, H04W 12/75

(54) **AMBIENT IOT IDENTIFIER MANAGEMENT**

(71) Applicant: Panasonic Intellectual Property Corporation of America, Torrance, CA 90504 (US)
(72) Inventor: KUANG, Quan, 63225 Langen (DE); SUZUKI, Hidetoshi, Osaka, 571-8501 (JP); DHANANJAYA, Harshith, 63225 Langen (DE)
(74) Representative: Grünecker Patent- und Rechtsanwälte PartG mbB

(57) **Abstract**

The disclosure relates to an ambient Internet of Things (A-loT) device, a reader device, a network entity, and respective methods for an A-loT device, a reader device, and a network entity. More specifically, the A-loT device comprises a transceiver and a circuitry. The transceiver, in operation, receives a paging message; transmits a first message including an identifier indication for the A-loT device. The circuitry, in operation, obtains, based on the identifier indication, a temporary identifier, ID, for the A-loT device.

## Description

### BACKGROUND

### 1. Technical Field

The present disclosure relates to transmission and reception of in a communication system. In particular, the present disclosure relates to methods and apparatuses for such transmission and reception.

### 2. Description of the Related Art

The Internet of things (IoT) market is a major source of revenue for future wireless technology and is a steadily growing market. Building and commercial, health, agriculture, infrastructure, and industries are some of the key sectors targeted by the loT market. Energy harvesting technology is a key to the success of the loT market as it can considerably reduce device operational costs. Ambient loT devices (energy harvesting devices) harvest energy from natural or ambient sources, for example, electromagnetic, solar, thermal or mechanical (pressure, vibration) sources, and operate either with a small battery or without battery. The 3rd Generation Partnership Project (3GPP) works at technical specifications for the next generation cellular technology, which is also called fifth generation (5G) including "New Radio" (NR) radio access technology (RAT), which operates in frequency ranges up to 100 GHz. Integration of ambient loT (A-loT) devices in communication networks, particularly, 5G and future technologies, is an important demanding task, particularly, since A-loT devices lack RRC states and ARQ and HARQ transmission protocols that ensure reliable data delivery, A-loT devices have limited power available resulting in reduced time periods of communication capability and A-loT devices are configured with new specifically designed new operation states.

### SUMMARY

One non-limiting and exemplary embodiment facilitates management of an identifier for an ambient Internet of Things, A-loT, device.

In an embodiment, the techniques disclosed here feature an apparatus (e.g. an A-loT device). The apparatus comprises a transceiver and circuitry. The transceiver, in operation, receives a paging message; transmits a first message including an identifier indication for the A-loT device. The circuitry, in operation, obtains, based on the identifier indication, a temporary identifier, ID, for the A-loT device.

It should be noted that general or specific embodiments may be implemented as a system, a method, an integrated circuit, a computer program, a storage medium, or any selective combination thereof. For instance, an integrated circuit can control a process of an A-loT device, a reader or network node.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF THE FIGURES

In the following exemplary embodiments are described in more detail with reference to the attached figures and drawings.
- **Fig. 1**: shows an exemplary architecture for a 3GPP NR system to which the improved procedures of the present disclosure may be applied;
- **Fig. 2**: illustrates a node-A-loT device topology;
- **Fig. 3**: illustrates another node-A-loT device topology;
- **Fig. 4**: is a flow chart showing method steps for an A-loT device for obtaining a temporary identifier for the A-loT device in accordance with exemplary embodiments of the present disclosure;
- **Fig. 5**: is a flow chart showing method steps for a reader device for obtaining a temporary identifier for an A-loT device in accordance with exemplary embodiments of the present disclosure;
- **Fig. 6**: is a flow chart showing method steps for a network entity for obtaining a temporary identifier for an A-loT device in accordance with exemplary embodiments of the present disclosure;
- **Fig. 7**: illustrates a scheme for assignment of a temporary ID within a 4-step A-loT random access (RA) procedure according to an embodiment, wherein the temporary ID is generated by a reader device;
- **Fig. 8**: illustrates a scheme for assignment of a temporary ID within a 2-step A-loT RA procedure according to an embodiment, wherein a random ID generated by the A-loT device is used as the temporary ID;
- **Fig. 9**: illustrates a scheme for assignment of a temporary ID within a 2-step A-loT RA procedure according to an embodiment, wherein the temporary ID is generated by a reader device;
- **Fig. 10**: illustrates a scheme for assignment of a temporary ID within a 4-step A-loT RA procedure according to an embodiment, wherein the temporary ID is generated by a base station;
- **Fig. 11**: illustrates a scheme for assignment of a temporary ID within a 2-step A-loT RA procedure according to an embodiment, wherein the temporary ID is generated by a base station;
- **Fig. 12**: illustrates a scheme for assignment of a temporary ID within a 4-step A-loT RA procedure according to an embodiment, wherein the temporary ID is generated by a core network function entity;
- **Fig. 13**: illustrates a scheme for assignment of a temporary ID within a 2-step A-loT RA procedure according to an embodiment, wherein the temporary ID is generated by a core network entity;
- **Fig. 14**: illustrates a first scheme for authenticating an A-loT device and managing a temporary ID according to an embodiment;
- **Fig. 15**: illustrates a second scheme for authenticating an A-loT device and managing a temporary ID according to an embodiment;
- **Fig. 16**: illustrates a third scheme for authenticating an A-loT device and managing a temporary ID according to an embodiment;
- **Fig. 17**: illustrates a fourth scheme for authenticating an A-loT device and managing a temporary ID according to an embodiment;
- **Fig. 18**: is a block diagram of a communication system in accordance with exemplary embodiments of the present disclosure;
- **Fig. 19**: is a block diagram of an exemplary circuitry of an A-loT device and a block diagram of an exemplary circuitry of a reader device in accordance with exemplary embodiments of the present disclosure;
- **Fig. 20**: is another block diagram of a communication system in accordance with exemplary embodiments of the present disclosure;
- **Fig. 21**: is a block diagram of an exemplary circuitry of a network entity in accordance with exemplary embodiments of the present disclosure;
- **Fig. 22**: is a block diagram showing an exemplary 5G system architecture for a non-roaming scenario;
- **Fig. 23**: shows exemplary functional split options in 5G O-RAN, to which exemplary embodiments of the present disclosure may be applied.

### DETAILED DESCRIPTION

### 5G NR system architecture and protocol stacks

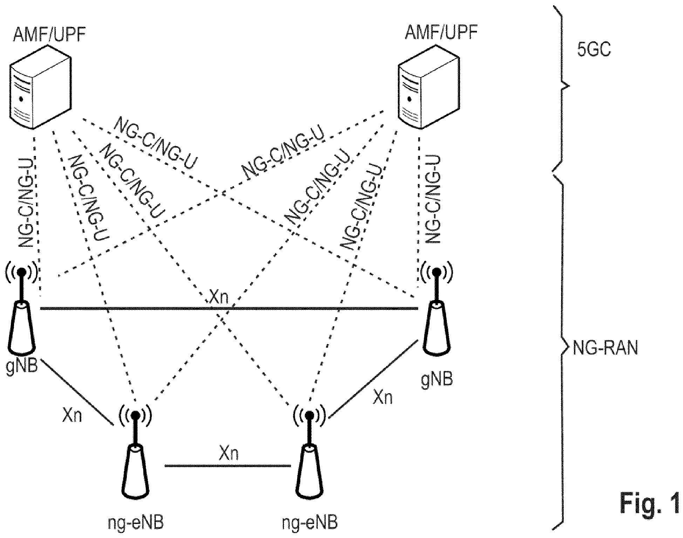

5G NR system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in Fig. 1 (see e.g. 3GPP TS 38.300 v15.6.0, section 4).

### Ambient IoT Device

An ambient loT device (A-loT device) is an energy harvesting device or terminal having a small battery or having no battery. The energy is provided through the harvesting of radio waves, light, motion, heat or any other power source that could be seen suitable. An A-loT device may be an ultra-low complexity device with ultra-low power consumption for very-low end loT applications. Examples for A-IoT devices include without any limitation wearables, smart home devices, automotive devices, sensors, smart keys, healthcare devices, electronic shelf label, etc.

To reduce complexity and power consumption, A-loT devices are assumed not supporting RRC states (i.e. RRC CONNECTED, RRC IDLE, and RRC INACTIVE as in current 5G NR). Further, A-loT devices have limited power available resulting in reduced time periods of communication capability and A-loT devices are expected to be configured with new specifically designed operation states and/or protocol stacks. Thus, integration of A-IoT devices into 5G and future technologies poses a demanding problem that is addressed in the present disclosure.

In particular, an A-loT device can be uniquely identified (at least) in 3GPP system using a Device ID. For example, the Device ID can be uniquely allocated by 3GPP network. Or as another example, if EPC (Electronic Product Code) is used as Device ID, it is designed to be unique across all physical objects in the world, over all time, and across all categories of physical objects.

The Device ID is expected to have large size due to unambiguous identification purpose. As an example, the size of EPC could be as large as 96 bits. Further, the Device ID is expected to be permanent, in the sense that it can be pre-configured and stored in the non-volatile memory of the device such that it can be kept even after device energy is exhausted.

However, using the Device ID for communication with the A-loT device may risk exposure of the A-loT device identifier (which is permanent) and thus unauthorized device tracking. Moreover, the large size of Device ID may cause unnecessary signaling overhead and energy usage.

### Embodiments

The present disclosure addresses the integration of A-loT devices into communication networks, particularly, 5G and future technologies.

It is noted that the present disclosure is not limited to A-loT devices. It may be also applicable to other devices with possibly substantial power limitations.

In the following, A-loT devices, base stations, intermediate nodes and procedures of communication will, particularly, be described for the new radio access technology envisioned for the 5G mobile communication systems, but may also be used in LTE mobile communication systems, 6G mobile communication systems and other wireless or wired communication system including wireless local area networks or the like. Different implementations and variants will be exemplified. The following disclosure was facilitated by the discussions and findings as described above and may for example be based at least on part thereof.

In general, it should be noted that many assumptions have been made herein so as to be able to explain the principles underlying the present disclosure in a clear and understandable manner. These assumptions are however to be understood as merely examples made herein for illustration purposes that should not limit the scope of the disclosure.

Moreover, some of the terms of the procedures, entities, layers etc. used in the following are closely related to LTE/LTE-A systems or to terminology used in the current 3GPP 5G standardization, even though specific terminology to be used in the context of the new radio access technology for the next 3GPP 5G communication systems is not fully decided yet or might finally change. Thus, terms could be changed in the future, without affecting the functioning of the embodiments. Consequently, a skilled person is aware that the embodiments and their scope of protection should not be restricted to particular terms exemplarily used herein for lack of newer or finally agreed terminology but should be more broadly understood in terms of functions and concepts that underlie the functioning and principles of the present disclosure.

For instance, a mobile station or mobile node or user terminal or user equipment (UE) or A-loT device is a physical entity (physical node) within a communication network. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

The term "base station" or "radio base station" here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB.

Communication between the A-loT device and the base station or an intermediate node is typically standardized and may be defined by different layers, such as PHY, MAC, or the like (see above background discussion).

An A-loT device may communicate with a reader (reader device). A reader is an equipment that directly communicates with the A-loT device. For example, a reader may be a base station. As another example, a reader may be an intermediate node (e.g. a UE, or the like).

The present disclosure relates to an A-loT device, a reader device, and a network entity connected to a base station, and methods of communication for the A-loT device, the reader device and the network entity. A network entity or network function entity may be, for example, a base station or a core network function entity.

### Topologies

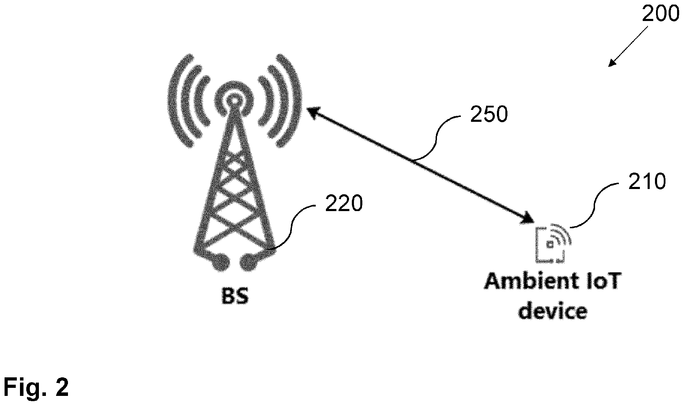

Particularly, two different topologies are exemplarily considered in this disclosure. In a first topology 200 as illustrated in **Fig. 2****,** an A-loT device 210 directly and bidirectionally communicates with a base station 220 over a wireless channel 250. The communication may include transmitting and/or receiving signals that may carry data. The data may include user data (e.g. measurements performed by the loT) and/or signaling information or signals such as control signals, reference signals or the like. The direct communication with the base station may still include communication via one or more distributed units, DU, of the base stations. A base station may operate one or more cells. In the exemplary implementation of Fig. 2, the base station functions as reader device.

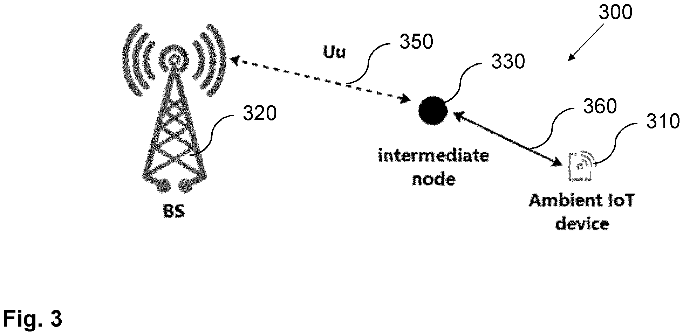

In a second topology as illustrated in **Fig. 3****,** an A-loT device 310 bidirectionally communicates with an intermediate node 330 that is located between the A-loT device 310 and the base station 320. The intermediate node 330 could be a UE, IAB, relay, or NCR. The intermediate node 330 is connected to both the base station 320 and the A-loT device 310 and transfers the user data and/ signaling between the A-loT device 210 and the base station 320. Traffics are A-loT device terminated or A-loT device originated. The BS 320 may communicate with the intermediate node 330 via a first interface 350. In Fig. 2 this is exemplified as the Uu interface (UE - gNB interface in NR). The intermediate node 330 may communicate with the A-loT device 310 via a second interface 360. The present disclosure is not limited to any specific interface definition. In general, interfaces 350 and 360 may be both wireless interfaces. In the exemplary implementation of Fig. 3, the intermediate node 330 functions as reader device.

### A-IoT identifier management

In these embodiments, an ambient loT (A-loT) device obtains a temporary identifier (ID) for the A-loT device. Such temporary IDs may be managed by a reader device, a base station, a core network function entity or the like.

It is provided an ambient Internet of Things, A-loT, device, comprising a transceiver which, in operation, receives a paging message.

Such an A-loT device may be pre-configured with a device ID and/or a group ID. The device ID may be an ID that facilitates uniquely identifying an A-loT device (at least) in the 3GPP system. For example, the device ID may be uniquely allocated by 3GPP network. Or as another example, if EPC (Electronic Product Code) may be used as Device ID, it is designed to be unique across all physical objects in the world, over all time, and across all categories of physical objects. Such a device ID is expected to be "permanent", i.e. it may be pre-configured and stored in the non-volatile memory of the device (meaning that the content can be kept even after energy is exhausted).

A group ID may be an ID which is pre-configured to a group of A-loT devices. The group of A-loT devices includes one or more A-loT devices. The group ID may also be a partial device ID which is shared by one or more A-loT devices.

The paging message may be received from a reader device, a base station, or the like. For example, an A-loT paging message may be a message including a group ID that maps to multiple A-loT devices. For example, an A-loT paging message may be a message that does not include an ID, i.e., addressed for all devices that can receive the A-loT message.

The transceiver further transmits a first message including an identifier indication for the A-loT device. For example, the transmitting of the first message may be performed upon receiving the paging message.

In case the paging message includes a group ID, the A-loT device may transmit the first message if the A-loT device determines that it belongs to the target device(s) addressed by the paging message, for example, the received group ID matches locally stored group ID.

The first message may be transmitted to a reader device, which may be a user equipment, a base station, or the like. For example, the first message may be transmitted to the device, which transmitted the paging message to the A-loT device.

The transmitting of the first message may include a generating of identifier information. The identifier indication may be for example, a random number. For example, the random number may be based on a device ID of the A-loT device. For example, the random number may be based on a parameter, which may be included in the paging message. The parameter may be a seed for generating a random number as identifier indication. For example, the random number may be based on the device ID of the A-loT device and/or the parameter, which may be included in the paging message. The expression "identifier indication" and the expression "random ID" may be interchanged throughout the present disclosure.

The A-loT device further comprises circuitry which, in operation, obtains, based on the identifier indication, a temporary identifier (ID) for the A-loT device. The temporary ID may be an identifier for the A-loT device on AS-level (access stratum level) or on NAS-level (non-access stratum level). Without limiting the present disclosure, the temporary ID may be referred to as AS-level ID herein. However, the temporary ID may also be a NAS-level ID.

For example, such a temporary ID may have a shorter length than the device ID of the A-loT device. For example, such a temporary ID may have length of 8 bits or 16 bits as an AS-level ID to uniquely identify an A-loT device within the coverage of one reader device or one base station, respectively. As another example, such a temporary ID may have length of 64 bits as a NAS-level ID. Such a temporary ID may be shorter than a Device ID that is used to uniquely identify an A-loT device within whole 3GPP system as mentioned above.

The obtaining of the temporary ID may, for example, include using the identifier indication as temporary ID. The obtaining of the temporary ID may, for example, include using a part of the identifier indication as temporary ID. The obtaining of the temporary ID may, for example, include combining at least a part of the identifier indication and other identifier information to obtain temporary ID. The other identifier information may be received by the A-loT device from the reader device. The obtaining of the temporary ID may, for example, include receiving the temporary ID from the reader.

The temporary ID may be stored in a volatile memory or a non-volatile memory of the A-loT device. A temporal ID may be re-assigned in case that it is lost by device due to energy shortage. A loss of the temporal ID may arise in case the temporary ID is stored in a volatile memory.

Using such a temporary ID for an A-loT device may avoid an exposing of the device ID of the A-loT device and/or reducing the signaling overhead.

The transmitted first message may be an Msg1 of a A-loT random access (RA) procedure, a A-loT Msg1. The RA procedure may be, for example, a 2-step or 4-step RA procedure.

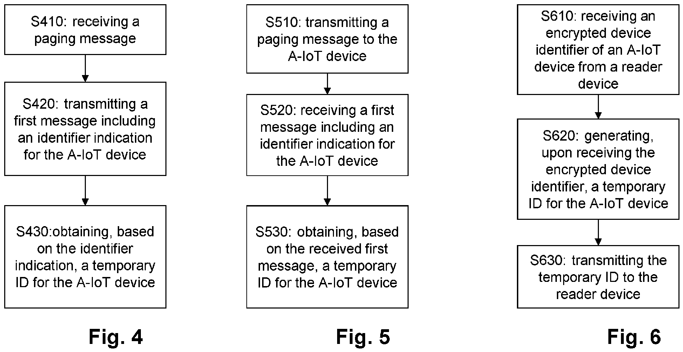

In correspondence with the above-described A-loT device, a method for obtaining a temporary identifier for the A-loT device is provided. As shown in **Fig. 4****,** the method comprises the steps of:
- receiving S410 a paging message;
- transmitting S420 a first message including an identifier indication for the A-loT device, and
- obtaining S430, based on the identifier indication, a temporary identifier, ID, for the A-loT device.

It is noted that although embodiments and examples of the present disclosure are provided in terms of devices providing the functionality, the corresponding methods are also provided. Moreover, it is noted that any of the steps described above may be included as code instructions in a program, which may be executed by one or more processors.

The A-loT device may further receive a second message, the second message including the identifier indication. In particular, the transceiver included in the A-loT device may receive the second message. In other words, the second message echoes the identifier identification (random ID). The second message may be transmitted from the reader device to the A-loT device.

The term "***transceiver***" refers to a front end including one or more antenna (more than one antenna in case beamforming is used). A transceiver here can further include an amplifier, some modulators for modulation of the baseband signal onto the system carrier, possibly also the D/A converter and possibly further signal improvement circuitry. In general, a transceiver may comprise and/or function as a receiver and/or a transmitter. In this disclosure, in other words, the term "*transceiver*" is used for hardware and software components that allow a communication apparatus (or "communication device") to transmit and/or receive radio signals over a wireless channel. Accordingly, a transceiver corresponds to a receiver, a transmitter, or a combination of receiver and transmitter. Typically, a base station and a communication device are assumed to be capable of transmitting as well as receiving radio signals. However, particularly with respect to some applications of eMBB, mMTC and URLLC (smart home, smart city, industry automation etc.), cases are conceivable in which a device, such as a sensor, only receives signals. A transmitter may be responsible for performing the process of transmitting and other processes related thereto. A receiver may be responsible for performing the process of receiving and other processes related thereto, such as monitoring a channel. In general, a transceiver may be controlled by a circuitry to perform said transmitting and/or receiving.

The term "***circuitry***" herein refers to any hardware and/or software. For example, the circuitry may include one or more processors (or processing units or any LSIs), microcontrollers, programmable hardware such as FPGA(s) (field programmable gate array) and/or dedicated hardware such as ASIC(s) (application-specific integrated circuit) or the like, possibly further including further digital or analog circuits.

Between the transceiver and the processing circuitry there may be an input/output point (or node) over which the processing circuitry, in operation, can control the transceiver, i.e. control the receiver and/or the transmitter and exchange reception/transmission data. The processing circuitry may implement control tasks such as controlling the transceiver to transmit user data and control data provided by the processing circuitry and/or receive user data and control data, which is further processed by the processing circuitry. The processing circuitry may also be responsible for performing other processes such as determining, deciding, calculating, measuring, etc.

Thus, the A-loT device receiving/transmitting a message means that the transceiver included in the A-loT device receives/transmits said message.

The second message may be an A-loT Msg2 of a random access (RA) procedure. The RA procedure may be, for example, a 2-step or 4-step RA procedure.

In general A-loT Msg2 may include a different identification information indicating a different A-IOT. The reception may include a determination to determine if the received random ID (identifier indication) matches the one in A-loT Msg1. In case it does not match, the RA procedure for the present A-loT may end. Alternatively, the present A-loT may wait for another paging to restart RA procedure or another A-loT Msg2 to continue RA procedure.

### (Temporary ID assigning using 4-step RA)

In addition to the first and the second message described above, the A-loT may further transmit a third message upon receiving the second message. The third message may include a device identifier (ID) of the A-loT device. The third message may be an A-loT Msg3 of a random access (RA) procedure. The second message may be transmitted from the reader to the A-loT device.

The device identifier of the A-loT device may be an encrypted device identifier. The transmitting of the third message may further include obtaining the encrypted device identifier of the A-loT device. In other words, the circuity, in operation, further obtains the encrypted device identifier of the A-loT device, before the transmitter, in operation, transmits the third message.

For example, the A-loT device may obtain the encrypted device ID by encrypting the device ID. For example, the A-loT device may obtain the encrypted device ID by selecting an encrypted ID out of a plurality of encrypted device IDs. The plurality of encrypted device IDs may correspond to a set of pre-encrypted device IDs. In other words, the device ID may be encrypted using a plurality of different encryption methods and/or encryption parameters to obtain the plurality of encrypted device IDs. For example, the A-loT device may select or compute an encrypted device ID based on an indication included in the received second message. For example, the A-loT device may select or compute an encrypted device ID based on a configuration, a standard, or the like. If a set of pre-encrypted device IDs are stored in the device, the device does not need to perform encryption computation on-the-fly. However, in such a case, the encrypted device ID is limited to this pre-configured set.

The A-loT may further receives a fourth message. The fourth message may include at least a part of the temporary ID. The fourth message may be an A-loT Msg4 of a (4-step) random access (RA) procedure. The fourth message may not be called A-loT Msg4. It may just be a subsequent R2D (reader-to-device) transmission after A-loT Msg3. If the device needs a confirmation from the reader on whether A-loT Msg3 is successfully received, the fourth message may be referred to as A-loT Msg4.

The at least a part of the temporary ID may be generated by the reader, a base station, a core network function entity or the like.

In general, the temporary ID may be generated (obtained) using none, a part or whole of the random ID. Thus, the A-loT device may receive at least a part of the temporary ID from a reader. For example, the A-loT device may receive the (whole) temporary ID from the reader.

As already mentioned, the A-loT device may generate the temporary ID using (a part of) the random ID (identifier indication). For example, the A-loT device may generate a temporary ID from a part of the random ID and the received part of the temporary ID included in the third message.

For example, the obtaining of the temporary ID includes using the identifier indication as temporary ID. In such case, an A-loT Msg4 may not be received. The device may assume that the random ID becomes the temporary ID if no A-loT Msg4 is received after a certain time period after sending A-loT Msg3.

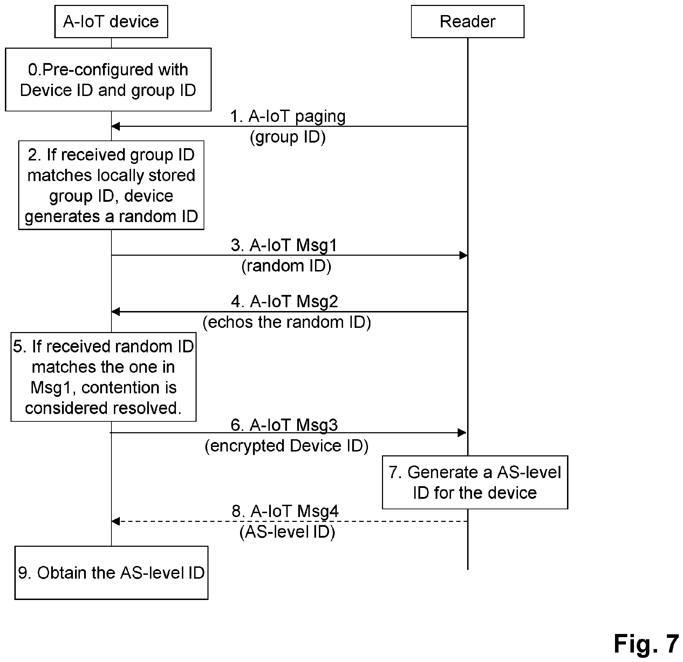

In a first exemplary implementation illustrated in **Fig. 7****,** a temporary ID is assigned using a 4-step RA. The A-loT device may be pre-configured with a device ID and a group ID (step 0 of the first exemplary implementation).

In step 1 of the first exemplary implementation, an A-loT paging message is received from the reader. A group ID is used for A-loT paging in this example. Alternative, other pre-configured ID such as an initial AS-level ID, or partial Device ID may be used instead. In step 2 of the first exemplary implementation, the random number may be based on Device ID or/and parameter (such as a seed) received in step 1, or just randomly generated. Such a generation may be performed if the received group ID matches the locally stored group ID of the A-loT device.

In step 3 of the first exemplary implementation, an A-loT Msg1 (the first message) is transmitted from the A-loT device to the reader. The A-loT Msg1 includes the random ID. Each device with the matched group ID respond with an individually generated random ID in A-loT Msg1 to the reader. For a size of the random ID being sufficiently large, ID collision probability may be ignored. By echoing the random ID in an A-loT Msg2 in step 4 of the first exemplary implementation, the reader has selected the corresponding A-loT device to proceed.

In step 5 of the first exemplary implementation, the A-loT device may determine if the received random ID matches the one in A-loT Msg1. If this is the case, the contention is considered resolved.

In step 6 of the first exemplary implementation, the A-loT device transmits an encrypted device ID to the reader in a A-loT Msg3. The encrypted Device ID may be computed by the device using pre-stored security algorithm with some further input of fresh parameter(s) received in A-loT Msg2. The fresh parameter(s) may be generated by a reader or by core network (and passed to the reader). Alternatively, the device may pre-store one or multiple candidate(s) of encrypted Device IDs, corresponding to a limited set of fresh parameters. This alternative may eliminate the need for the A-loT device to perform encryption operation on-the-fly. A transmission of the device ID without encryption may also be possible.

In step 7 of the first exemplary implementation, the AS-level ID may be generated using none, a part or whole of the random ID that the reader echoed in A-loT Msg2. In step 8 of the first exemplary implementation, the AS-level ID (temporary ID) may be transmitted to the A-loT device in A-loT Msg4. In case that whole random ID is reused as AS-level ID, step 8 is not needed. The A-loT device may assume random ID becomes AS-level ID if no A-loT Msg4 received after a certain time period after sending A-loT Msg3. In case that partial random ID is reused as AS-level ID, step 8 may just send the new part to save signaling overhead.

Step 8 of the first exemplary implementation may not be called A-loT Msg4. It may just be a subsequent R2D transmission after A-loT Msg3. If device needs a confirmation from Reader on whether A-loT Msg3 is successfully received, step 8 can be referred to as A-loT Msg4.

### (Temporary ID assigning using 2-step RA)

For example, the RA procedure may be a 2-step RA. In such a case the first message, as described above, may further include a device identifier (ID) of the A-loT device. The device identifier of the A-loT device may be an encrypted device identifier. The transmitting of the first message may further include obtaining the encrypted device identifier of the A-loT. In other words, the circuity, in operation, further obtains the encrypted device identifier of the A-loT device, before the transmitter, in operation, transmits the first message. The encryption for the encrypted device ID included in the first message may be performed as explained above for the encrypted device ID included in the third message. However, in the present disclosure, the 2-step RA may not necessarily include a transmission/reception of a A-loT Msg2. In general, if a confirmation from the reader on whether A-loT Msg1 is successfully received, may not be requires, A-loT Msg2 may not be transmitted and/or received.

For the exemplary implementation of a 2-step RA, the second message, as described above, may further include at least a part of the temporary ID. The obtaining of the temporary ID may include, upon receiving the second message, obtaining, based on the identifier indication included in the second message, the temporary ID from the second message.

The at least a part of the temporary ID may be generated by the reader, a base station, a core network function entity or the like.

In general, the temporary ID may be generated (obtained) using none, a part or whole of the random ID. Thus, the A-loT device may receive at least a part of the temporary ID from a reader. For example, the A-loT device may receive the (whole) temporary ID from the reader.

As already mentioned, the A-loT device may generate the temporary ID using (a part of) the random ID (identifier indication). For example, the A-loT device may generate a temporary ID from a part of the random ID and the received part of the temporary ID included in the second message.

For example, the obtaining of the temporary ID includes using the identifier indication as temporary ID. In such case, a second message may not be transmitted and/or received. The device may assume that the random ID becomes the temporary ID if no A-loT Msg2 is received after a certain time period after sending A-loT Msg1.

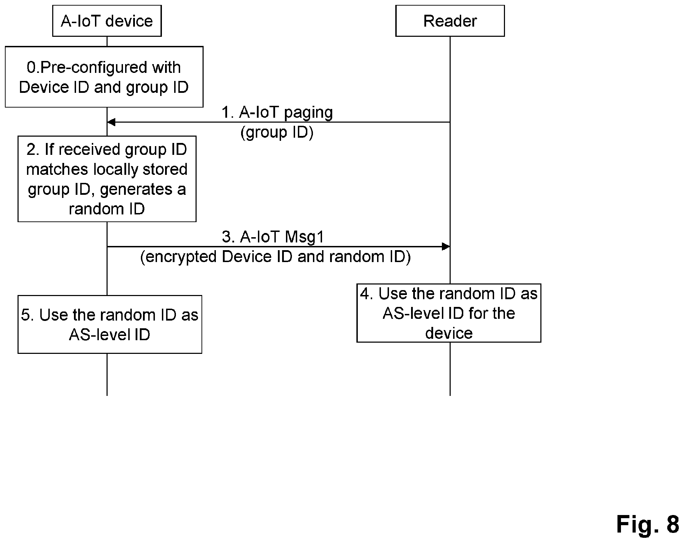

In a second exemplary implementation illustrated in **Fig. 8****,** a temporary ID is assigned using a 2-step RA. Step 0, step 1 and step 2 of the second exemplary implementation are analogous to the corresponding steps in the first exemplary implementation.

In step 3 of the second exemplary implementation, all devices with a matching group ID respond with individually generated random ID in A-loT Msg1 to the reader. Moreover A-loT Msg1 includes the (encrypted) device ID in the second exemplary implementation. The device ID may be sent without encryption to lower the complexity and/or cost of device. In step 4 of the second exemplary implementation, the reader uses the random ID as temporary ID (AS-level ID) for the A-loT device. In step 5 of the second exemplary implementation, the A-loT device uses the random ID as temporary ID (AS-level ID).

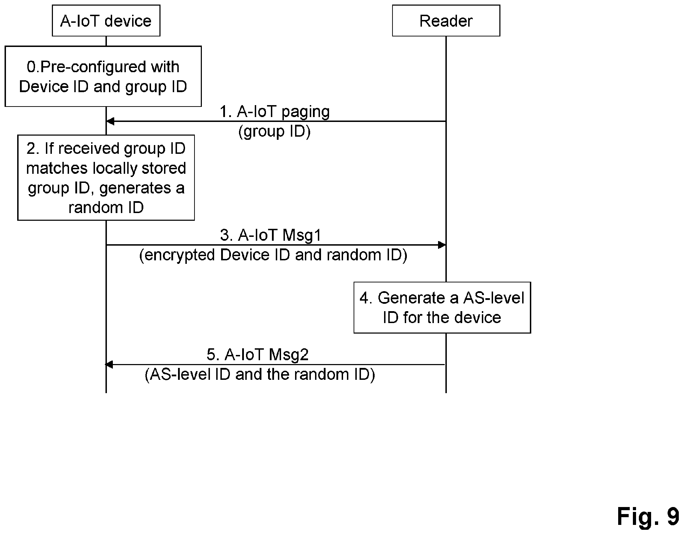

In a third exemplary implementation illustrated in **Fig. 9****,** a temporary ID is assigned using a 2-step RA. Step 0, step 1 and step 2 of the third exemplary implementation are analogous to the corresponding steps in the first exemplary implementation as well as the second exemplary implementation. Step 3 of the third exemplary implementation is analogous to step 3 of the second exemplary implementation. In step 4 of the third exemplary implementation, the reader generates the temporary ID (AS-level ID) for the A-loT device. The temporary ID may or may not be derived from the random ID received at A-loT Msg1. In step 5 of the third exemplary implementation, the temporary ID is transmitted together with the random ID in a A-loT Msg2 from the reader to the A-loT device. The random ID is included in A-loT Msg2 to identify the target A-loT device. As mentioned above, A-loT Msg2 may include a part of the temporary ID or the whole temporary ID.

### (Reader device)

It is further provided a reader device, comprising a transceiver which, in operation, transmits a paging message to the A-loT device; and receives a first message from the A-loT device, the first message including an identifier indication for the A-loT device; and circuitry which, in operation, obtains, based on the received first message, a temporary identifier, ID, for the A-loT device.

In other words, the reader (device) provided herein may (at least) perform the steps of receiving and/or transmitting of messages from or to the A-loT device as explained in detail in the sections above.

The obtaining of the temporary ID may include a generation of the temporary ID by the reader, or the reader may receive a message from a base station (BS) and/or a core network (CN) function entity, wherein the message includes the temporary ID.

In correspondence with the above-described reader device, a method for a reader device for obtaining a temporary identifier for the A-loT device is provided. As shown in **Fig. 5****,** the method comprises the steps of:
- transmitting S510 a paging message to the A-loT device;
- receiving S520 a first message from the A-loT device, the first message including an identifier indication for the A-loT device, and
- obtaining S530, based on the received first message, a temporary identifier, ID, for the A-loT device.

The reader device may further transmit a second message to the A-loT device. The second message may include the received identifier indication.

The reader device may perform steps of the ID assignment using a 4-step RA or steps of the ID assignment using a 2-step RA, as explained above for the A-loT device that communicates with the reader device.

The reader device, in particular, the circuitry, in operation, may further receive a device identifier of the A-loT device that is included in the first message, or another message that is received from the A-loT device.

For example, the reader device may receive a third message from the A-loT device after the transmission of the second message, the third message including a device identifier of the A-loT device. The device identifier may be encrypted as explained above. The reader device, after receiving the third message, may further transmit a fourth message to the A-loT device, the fourth message including at least a part of the obtained temporary ID. The first, second, third and fourth messages may be part of a 4-step RA, as explained above for the A-loT device. However, the reader device may not transmit a fourth message. In case a fourth message is not transmitted, the reader device may use the random ID as a temporary ID for the A-loT device.

Alternatively to receiving a third and optionally transmitting a fourth message, the first message received by the reader device may further include a device identifier of the A-loT device. As mentioned above, such a device identifier (ID) may be encrypted. The second message, which is transmitted from the reader to the A-loT device, may further include at least a part of the temporary ID. The first and the second message may be part of a 2-step RA, as explained above for the A-loT device. To obtain the second message for transmitting, the reader may further obtain the at least a part of the temporary ID. The temporary ID may be based on the random ID or may be generated independently of the random ID.

After the assigning of a temporary ID, the reader may transmit a service request to the A-loT device. The A-loT device may transmit a service response upon receiving the service request. The reader may receive the service response from the A-loT device. The service request and/or the service response may use the temporary ID.

### (Identifier generation at base station)

In addition to the messages transmitted between the A-loT device and the reader, the reader may transmit the device identifier to a base station. Moreover, the reader may receive from the base station the temporary ID for the A-loT device. In other words, the obtaining of the temporary ID for the A-loT device may include transmitting the device identifier to a base station, and receiving from the base station the temporary ID for the A-loT device. For example, the base station may generate the temporary ID. Such a generation may be based on the device ID and/or the identifier indication of the A-loT device. The reader may further transmit the identifier indication to the base station. For example, the base station may obtain the temporary ID from a network function entity, such as a core network function entity.

As explained above, the assigning of the temporary ID may be part of a 2-step or a 4-step RA procedure. Upon receiving the device ID from the A-loT device (either in the first message for the 2-step RA or in the third message for the 4-step RA), the reader may provide the (encrypted) device ID to a base station (gNB). A gNB may ensure the ID uniqueness across multiple associated readers.

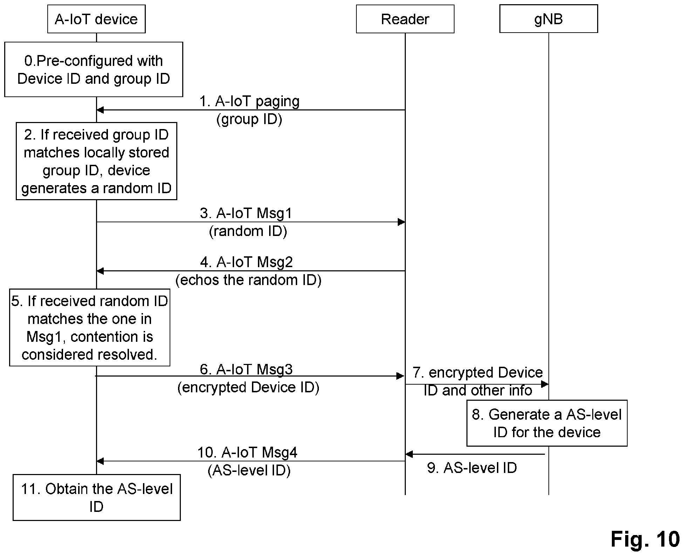

In a fourth exemplary implementation illustrated in **Fig. 10****,** the reader receives the temporary ID (AS-level ID in Fig. 10) from the base station (gNB) as part of a 4-step RA procedure. Steps 0 to 6 in Fig. 10 are identical to the respective steps 0 to 6 in the first exemplary implementation illustrated in Fig. 7, which is explained in detail above. In step 7 of the fourth exemplary implementation, the reader transmits the (encrypted) device ID to the gNB. The reader may also transmit other information to the gNB. The other information may include, for example, the identifier indication (random ID). In other words in step 7, the device ID is sent to gNB with possible other information, e.g. the random ID received by reader. Such information may be used by gNB to generate the AS-level ID.

The gNB generates a temporary ID (AS-level ID) for the A-loT device in step 8 of the fourth exemplary implementation. The temporary ID may or may not be derived from the random ID received at A-IoT Msg1. The reader receives the temporary ID in step 9 of the fourth exemplary implementation from the gNB. In step 10 of the fourth exemplary implementation, the reader transmits the temporary ID (AS-level ID) to the A-loT device. The message in step 10 may include only a part of the temporary ID. The message in step 10 may further include the identifier indication. The A-loT device obtains the temporary ID in step 11 of the fourth exemplary implementation based on the received fourth message. The fourth message may be an A-loT Msg4 of a 4-step RA.

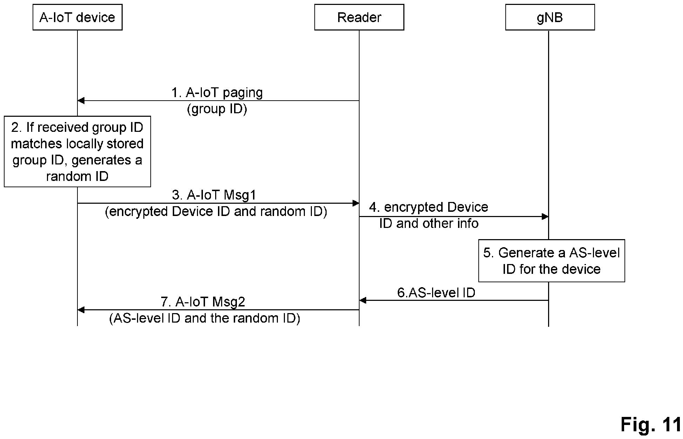

In a fifth exemplary implementation illustrated in **Fig. 11****,** the reader receives the temporary ID (AS-level ID in Fig. 11) from the base station (gNB) as part of a 2-step RA procedure. Steps 0 to 3 in Fig. 11 are identical to the respective steps 0 to 3 in the third exemplary implementation illustrated in Fig. 9, which is explained in detail above. The steps 4, 5 and 6, which include transmitting the device ID from the reader to the gNB and receiving the temporary ID from the gNB, are identical to the respective steps 7, 8 and 9 of the fourth exemplary implementation of Fig. 10 as described above. In step 7 of the fifth exemplary implementation, the temporary ID is transmitted together with the random ID in a A-loT Msg2 from the reader to the A-loT device. The random ID is included in A-loT Msg2 to identify the target A-loT device. As mentioned above, A-loT Msg2 may include a part of the temporary ID or the whole temporary ID.

Moreover, a network entity is provided, comprising a transceiver which, in operation, receives an encrypted device identifier of an A-loT device from a reader device; and circuitry which, in operation, generates, upon receiving the encrypted device identifier, a temporary identifier, ID, for the A-loT device; and the transceiver, in operation, further transmits the temporary ID to the reader device. The network entity may be a base station or a core network function entity. The network entity may be, for example, the base station as described in the present section for communication with the reader.

In correspondence with the above-described network entity, a method for a network entity for obtaining a temporary identifier for the A-loT device is provided. As shown in **Fig. 6****,** the method comprises the steps of:
- receiving S610 an encrypted device identifier of an A-loT device from a reader device;
- generating S620, upon receiving the encrypted device identifier, a temporary identifier, ID, for the A-loT device, and
- transmitting S630 the temporary ID to the reader device.

### (identifier generation at core network function entity)

In addition to the messages transmitted between the A-loT device and the reader, the reader may transmit the device identifier to a core network (CN) function entity. Moreover, the reader may receive from the CN function entity the temporary ID for the A-loT device. In other words, the obtaining of the temporary ID for the A-loT device may include transmitting the device identifier to a CN function entity, and receiving from the CN function entity the temporary ID for the A-loT device. For example, the CN function entity may generate the temporary ID. Such a generation may be based on the device ID and/or the identifier indication of the A-loT device. The reader may further transmit the identifier indication to the CN function entity.

A temporal ID generated by a CN function entity may be used for both AS-and NAS-levels. The CN function entity may ensure ID uniqueness across multiple gNBs. A CN function entity may be introduced to support temporal ID assigning function. It might be referred to as A-loT controller, A-loTF (A-loT Function), or A-loT-NF (Network Function), which may be regarded as a standalone NF. Alternatively, an existing NF (such as AMF) may be enhanced to support the required functionality.

For communication between the A-loT device and the CN function entity, a NAS-message carrying the (encrypted) device ID may be included in the first message (e.g. A-loT Msg1 in a 2-step RA) or the third message (e.g. A-loT Msg3 in a 4 step RA). The transmitting of the temporary ID to the A-loT device may include msg2 (2-step RA) or msg4 (4 step RA) being a NAS message carrying the temporary ID.

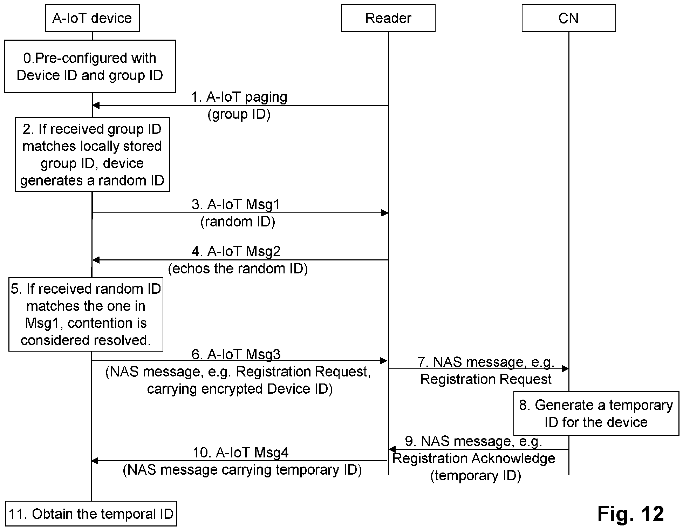

In a sixth exemplary implementation illustrated in **Fig. 12****,** the reader receives the temporary ID from the core network (CN) as part of a 4-step RA procedure. Steps 0 to 5 in Fig. 12 are identical to the respective steps 0 to 5 in the first exemplary implementation illustrated in Fig. 7, which is explained in detail above. In step 6 of the sixth exemplary implementation, which is similar to step 6 of the first exemplary implementation, the A-loT Msg3 (the third message) is transmitted from the A-loT device to the reader. The A-loT Msg3 includes NAS message, e.g. Registration Request, carrying encrypted Device ID. In other words, in step 6, a NAS message is piggybacked on A-loT Msg3 and passed to CN (e.g. AMF). In step 7 of the sixth exemplary implementation, the reader transmits the NAS message, e.g. Registration Request, to the CN (CN function entity). The reader may also transmit other information to the CN. The other information may include, for example, the identifier indication (random ID).

The CN function entity (e.g. AMF) generates a temporary ID for the A-loT device in step 8 of the sixth exemplary implementation. The temporary ID may or may not be derived from the random ID received atA-loT Msg1. In steps 9 and 10, the generated temporal ID is transmitted to device via Reader by a NAS message. In particular, the reader receives the temporary ID in step 9 of the sixth exemplary implementation from the CN, for example, in a NAS message, e.g. Registration Acknowledge, including the temporary ID. In step 10 of the fourth exemplary implementation, the reader transmits the temporary ID to the A-loT device. The message in step 10 may include only a part of the temporary ID. The message in step 10 may further include the identifier indication. The A-loT device obtains the temporary ID in step 11 of the fourth exemplary implementation based on the received fourth message. The fourth message may be an A-loT Msg4 of a 4-step RA. Step 10 may not be called A-loT Msg4. It may just be a subsequent R2D transmission after A-loT Msg3.

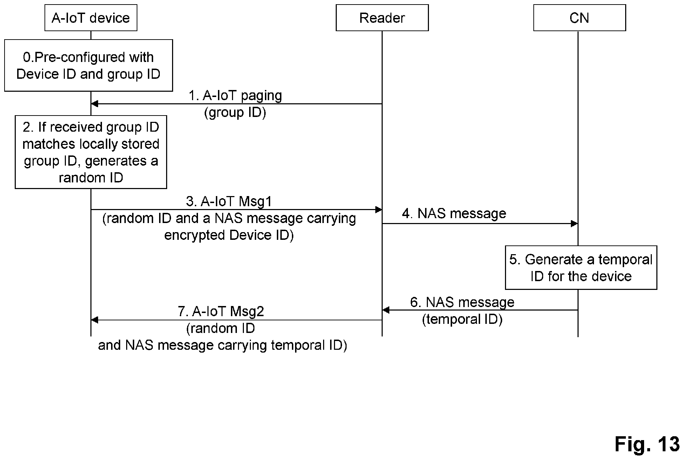

In a seventh exemplary implementation illustrated in **Fig. 13****,** the reader receives the temporary ID from the core network (CN) as part of a 2-step RA procedure. Steps 0 to 2 in Fig. 13 are identical to the respective steps 0 to 2 in the third exemplary implementation illustrated in Fig. 9, which is explained in detail above. In step 3 of the seventh exemplary implementation, which is similar to step 3 of the second exemplary implementation, the A-loT Msg1 (the first message) is transmitted from the A-loT device to the reader. The A-loT Msg1 includes the random ID and a NAS message, e.g. Registration Request, carrying encrypted Device ID. In other words, in step 1, a NAS message is piggybacked on A-loT Msg1 and passed to CN (e.g. AMF).

The steps 4, 5 and 6, which include transmitting the device ID from the reader to the CN and receiving the temporary ID from the CN, are identical to the respective steps 7, 8 and 9 of the sixth exemplary implementation of Fig. 12 as described above. In step 7 of the seventh exemplary implementation, the temporary ID that is included in a NAS message, is transmitted together with the random ID in a A-loT Msg2 from the reader to the A-loT device. The random ID is included in A-loT Msg2 to identify the target A-loT device. As mentioned above, A-loT Msg2 may include a part of the temporary ID or the whole temporary ID.

Moreover, a network entity is provided, comprising a transceiver which, in operation, receives an encrypted device identifier of an A-loT device from a reader device; and circuitry which, in operation, generates, upon receiving the encrypted device identifier, a temporary identifier, ID, for the A-loT device; and the transceiver, in operation, further transmits the temporary ID to the reader device. The network entity may be a base station or a core network function entity. The network entity may be, for example, the core network function entity as described in the present section for communication with the reader.

### (Authentication based on device ID)

The reader device may perform an authentication of the A-loT device after receiving the device identifier. Such an authentication may include providing the device identifier to an authentication network entity, receiving an authentication result from the authentication network entity. A mapping between the device identifier and the obtained temporary ID may be performed based on the authentication result. Such a mapping may include storing an association between the device identifier and the obtained temporary ID in a storage. The mapping may be stored in the reader device, a base station, a core network entity or the like, e.g. as a mapping table.

An authentication may be performed to verify or validate the identity of the A-loT device. This may ensure that only authorized devices may access specific resources or perform certain actions.

Such an authentication procedure may be combined with any of the first to seventh exemplary implementations for assigning a temporary ID.

For such an authentication, the device ID may, for example, be not encrypted. For example, a certain A-loT device may not need to perform device ID encryption in A-loT random access, to further lower the complexity. In such case, the device ID is directly sent in A-loT Msg3 (for 4-step RA) or A-loT Msg1 (for 2-step RA).

For example, the device identifier of the A-loT device is an encrypted device identifier. In case the device ID is encrypted, a decryption may be performed before or together with an authentication. Such a decryption may be performed, for example, by the reader device, by a base station, by a core network function entity, or by a third party.

In case the device identifier (ID) is encrypted, the reader may perform a mapping between the encrypted device identifier and the obtained temporary ID, after receiving the device identifier. Moreover, the reader may perform an authentication.

The authentication may comprise decrypting the encrypted device identifier. The decrypted device identifier may be provided to an authentication network entity. Such an authentication network entity may be a CN function entity or a base station. The reader device may receive an authentication result from the authentication network entity. Alternatively, the reader may perform an authentication based on the decrypted device ID, which could be particularly useful for a handy reader device quick checks for the inventory within its coverage.

The reader may further perform a mapping between the decrypted device identifier and the obtained temporary ID based on the authentication result. For example, in case the authentication was successful, the mapping may be updated and/or extended to include the decrypted device ID. In other words, after decryption, the reader deceive may replace the encrypted device ID with the decrypted Device ID in the mapping between Device ID and temporary ID. For example, in case the authentication was successful, the mapping may be updated and/or extended to include the authentication result. For example, in case the authentication was unsuccessful, mapping between the encrypted device identifier and the obtained temporary ID may be deleted. For example, in case the authentication was successful, the mapping may be updated and/or extended to include the result of the successful authentication.

For the decryption, the reader may receive credential materials from CN to decrypt the device ID.

The device ID decryption and device authentication may be performed after the temporary ID is assigned, or alternatively during the procedure of AS-level assignment. In former case, if authentication fails, the assigned temporary ID will be abandoned. In latter case, the temporary ID is assigned only after a successful authentication. For service request and response, decrypted device ID may be used between CN and reader. The temporary ID may be used between A-loT Device and reader.

In case the device identifier (ID) is encrypted, the reader may perform a mapping between the encrypted device identifier and the obtained temporary ID, after receiving the device identifier. Moreover, the reader may perform an authentication. The authentication may comprise providing the encrypted device identifier to an authentication network entity. Such an authentication network entity may be a CN function entity or a base station. The reader device may receive an authentication result from the authentication network entity. The reader may further update the mapping between the encrypted device identifier and the obtained temporary ID based on the authentication result. For service request and response, the encrypted device ID may be used between gNB and reader. The temporary ID may be used between A-loT device and reader. For example in case, the authentication network entity is a base station and the base station decrypts the device ID, the decrypted device ID may be used between CN and gNB.

A network entity, upon receiving the encrypted device identifier from a reader, may perform an authentication, including obtaining an authentication result based on a decrypted device identifier, transmitting an authentication result to the reader device. The network entity may be a base station or a core network function entity. In case that authentication is performed at a base station, in some deployments, the base station may act similar to factory or grocery store network system. The availability of A-loT devices may be known directly at the factory or the store level. On the other hand, the case where the authentication is performed at a CN function entity may be suitable for, e.g. the scenario where an A-loT service provider requests/contracts a 3GPP network operator to manage the A-loT device availability check.

The obtaining of the authentication result based on a decrypted device identifier may include providing the encrypted device ID to a 3^{rd} party such as a manufacturer of the A-loT device or an A-loT service provider. An authentication result may be obtained from the 3^{rd} party by the network entity for A-loT device authentication. In such case, the device ID may not be visible to 3GPP network. This is useful, for example, when an A-loT service provider would like to manage device availability check and does not want to disclose such information to the 3GPP network operator.

The obtaining of the authentication result based on a decrypted device identifier may include decrypting the encrypted device identifier by the network entity.

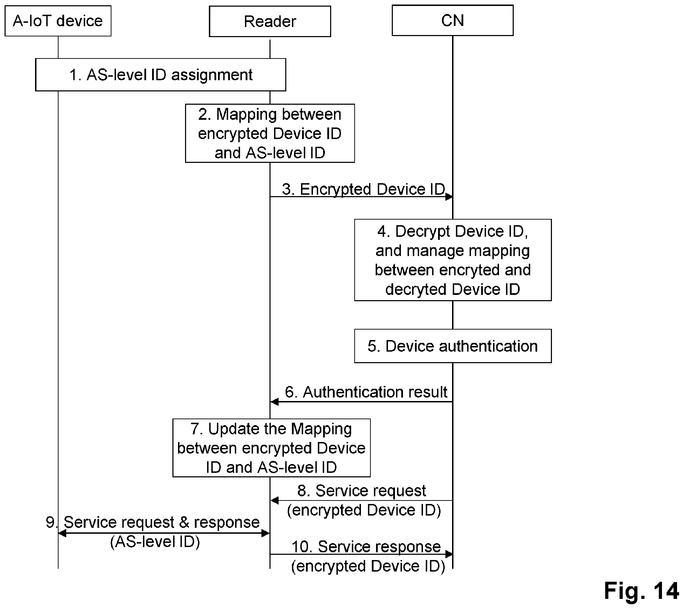

In an eighth exemplary implementation, an exemplary process for authentication is provided according to **Fig. 14****,** the A-loT device and the reader perform an assignment of a temporary ID (AS-level ID assignment in step 1 of Fig. 14). In general, any of the above-described assignment methods may be applied. Thus, the assigning may also include additional messages transmitted between the reader and a network entity, such as a base station or a core network function entity. In the eight exemplary implementation, the device ID received in the assignment of the temporary ID is encrypted. The reader performs a mapping between encrypted Device ID and AS-level ID in step 2 of the eighth exemplary implementation. In the eighth exemplary implementation, the encrypted device ID is transmitted from the reader to a core network function entity for authentication in step 3. The core network function entity decrypts the A-loT device ID. To facilitate CN to use corresponding credentials to decrypt the A-loT device ID, some description (e.g. group ID or device owner ID) may be sent together with encrypted A-loT device ID from the reader to CN.

Moreover, the CN function entity manages mapping between encrypted and decrypted Device ID in step 4 of the eighth exemplary implementation. The mapping may be performed as described in detail above. Moreover, the core network function entity may verify the A-loT device ID in a device authentication in step 5 of the eighth exemplary implementation. In general, device ID decryption and device authentication may be performed in the same or separate function entities.

An authentication result is provided to the reader in step 6 of the eighth exemplary implementation. The reader updates the mapping between the encrypted device ID and the AS-level ID in step 7 of the eighth exemplary implementation. After obtaining the authentication result, the reader can update the mapping. For example, if the device fails authentication, the already allocated AS-level ID may be marked as invalid and will not be used for Reader-Device communication.

Although the example here shows the device authentication happens after the reader generates the mapping between the encrypted device ID and the AS-level ID, an alternative option may be that the authentication happens before the reader generates the AS-level ID (e.g. after receiving Msg3 in Fig. 7 or Msg1 in Fig. 8). In this alternative option, AS-level ID may be assigned (e.g. via Msg4 in Fig. 7 or Msg2 in Fig. 8), after authentication is successful.

After temporary ID assignment and authentication, if CN initiates a service request such as inventory or command service, the encrypted device ID may be used between CN and reader. The AS-level ID may be used between A-loT device and reader. In more details, the reader may receive a service request from the core network function entity in step 8 of the eight exemplary implementation. The service request message includes the encrypted device ID for identifying the intended A-loT device by the reader. The reader may transmit a service request to the A-loT device using the AS-level ID for identification in step 9 of the eight exemplary implementation. The reader may obtain the AS-level ID from the mapping table based on the encrypted device ID included in the service request received from CN. A service response is transmitted from the A-loT device to the reader using the AS-level ID. In step 10 of the eight exemplary implementation, the reader transmits the service response to the CN using the encrypted device ID.

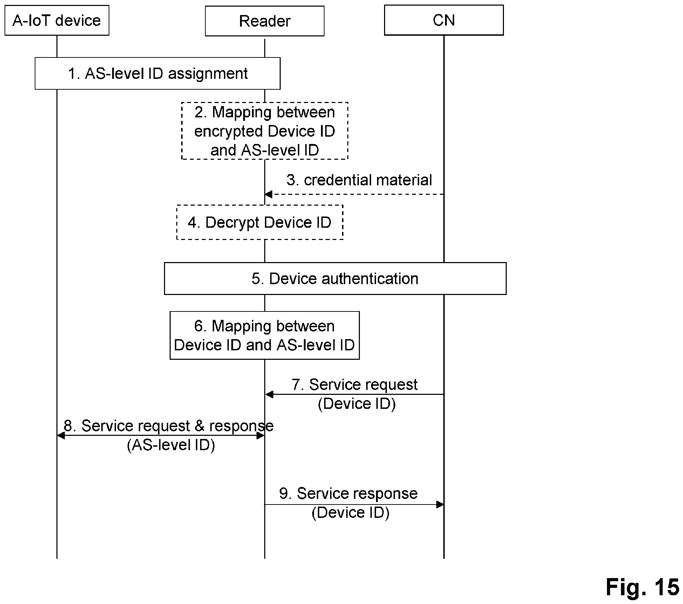

In a ninth exemplary implementation, an exemplary process for authentication is provided according to **Fig. 15****,** the A-loT device and the reader perform an assignment of a temporary ID (AS-level ID assignment in step 1 of Fig. 15). In general, any of the above-described assignment methods may be applied. Thus, the assigning may also include additional messages transmitted between the reader and a network entity, such as a base station or a core network function entity. In case the device ID received by the reader from the A-loT device in the assignment of a temporary ID is encrypted, the reader may perform a mapping between encrypted Device ID and AS-level ID in step 2 of the ninth exemplary implementation. For a decryption, the reader may receive credential material from a core network entity in step 3 of the ninth exemplary implementation. In other words, the reader uses the credential materials such as security keys and/or security algorithms from CN to decrypt the A-loT device ID. Based on the received credential material from the core network entity, the reader may perform a decryption in step 4 of the ninth exemplary implementation. The steps 2 to 4 are performed in case the device ID is encrypted. If the device ID is not encrypted, the steps 2 to 4 are not performed.

In step 5 of the ninth exemplary implementation, the A-loT device is authenticated. The device authentication may be performed at the reader or CN based on the (decrypted) A-loT device ID. After decryption, the reader may replace the encrypted device ID with the decrypted Device ID in the mapping between device ID and AS-level ID in step 6 of the ninth exemplary implementation.

Similar to the eighth exemplary implementation, the device ID decryption and device authentication may be performed after AS-level ID is assigned (as shown in Fig. 15), or alternatively during the procedure of AS-level assignment. In former case, if authentication fails, the assigned AS-level ID will be abandoned. In latter case, the AS-level ID is assigned only after a successful authentication.

For service request and response, decrypted device ID may be used between CN and Reader. AS-level ID may be used between A-loT device and Reader. The steps 7, 8 and 9 of the ninth exemplary implementation may be performed analogously to the steps 8, 9 and 10 of the eight exemplary implantation, respectively.

As already mentioned, the ninth exemplary implementation is also applicable for a A-loT device that does not need to perform device ID encryption in A-loT random access, to further lower the complexity. In such case, Device ID is directly sent in Msg3 (for 4-step RA) or Msg1 (for 2-step RA).

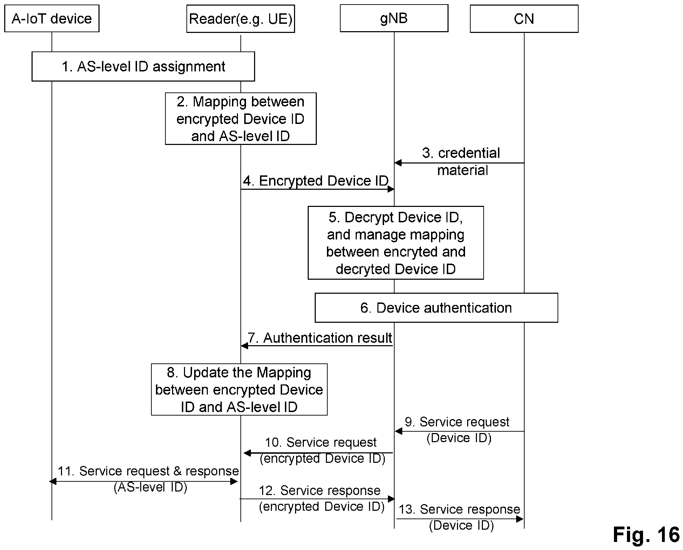

In a tenth exemplary implementation, an exemplary process for authentication is provided according to in **Fig. 16****.** The A-loT device and the reader perform an assignment of a temporary ID (AS-level ID assignment in step 1 of Fig. 16). In general, any of the above-described assignment methods may be applied. Thus, the assigning may also include additional messages transmitted between the reader and a network entity, such as a base station or a core network function entity. In the tenth exemplary implementation, the device ID received in the assignment of the temporary ID is encrypted. The reader performs a mapping between encrypted Device ID and AS-level ID in step 2 of the tenth exemplary implementation. In the tenth exemplary implementation, the encrypted device ID is transmitted in step 4 from the reader to a base station (gNB) for authentication. The gNB receives credential material from a CN function entity in step 3 of the tenth exemplary implementation. The credential material may include parameters and/or information for decrypting the A-loT device ID. Step 3 is not necessarily performed before step 4. In general, step 3 may be performed at any time before the decryption in step 5. Based on the received credential material from the core network entity, the gNB may perform a decryption in step 5 of the tenth exemplary implementation.

Moreover, the gNB manages mapping between encrypted and decrypted Device ID in step 5 of the tenth exemplary implementation. The mapping may be performed as described in detail above. Moreover, the core network function entity may verify the A-loT device ID in a device authentication in step 6 of the tenth exemplary implementation. In general, device ID decryption and device authentication may be performed in the same or separate function entities. The device authentication may be performed at the gNB or CN based on the (decrypted) A-loT device ID.

After decryption, the gNB provides a result of the authentication to the reader in step 7 of the tenth exemplary implementation. The reader updates the mapping between the encrypted device ID and the AS-level ID in step 7 of the tenth exemplary implementation. After obtaining the authentication result, the reader can update the mapping in step 8 of the tenth exemplary implementation. For example, if the device fails authentication, the already allocated AS-level ID may be marked as invalid and will not be used for Reader-Device communication.

Similar to the eighth and/or the ninth exemplary implementation, the device ID decryption and device authentication may be performed after AS-level ID is assigned (as shown in Fig. 16), or alternatively during the procedure of AS-level assignment. In former case, if authentication fails, the assigned AS-level ID will be abandoned (in the updating of the mapping). In latter case, the AS-level ID is assigned only after a successful authentication.

In the tenth exemplary implementation, for service request and response in steps 9 and 13, respectively, the decrypted A-loT device ID may be used between CN and gNB. Moreover, for service request and response in steps 10 and 12, respectively, the encrypted device ID may be used between gNB and reader. Furthermore, for service request and response in step 11, the AS-level ID may be used between A-loT device and reader. The service request and response may be performed similar as in the eight and/or ninth exemplary implementation.

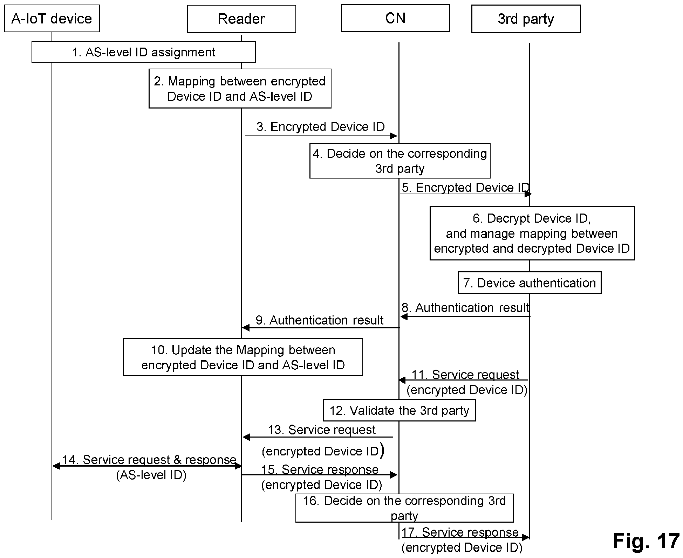

In an eleventh exemplary implementation, an exemplary process for authentication is provided according to in **Fig. 17****.** The A-loT device and the reader perform an assignment of a temporary ID (AS-level ID assignment in step 1 of Fig. 17). In general, any of the above-described assignment methods may be applied. Thus, the assigning may also include additional messages transmitted between the reader and a network entity, such as a base station or a core network function entity. In the eleventh exemplary implementation, the device ID received in the assignment of the temporary ID is encrypted. The reader performs a mapping between encrypted device ID and AS-level ID in step 2 of the eleventh exemplary implementation. In the eleventh exemplary implementation, the encrypted device ID is transmitted in step 3 from the reader to a CN function entity for authentication request.

The CN function entity determines that the authentication is performed by a 3^{rd} party. Instep 4, the CN function entity decides on a corresponding 3^{rd} party. The CN may determine the corresponding 3rd party (e.g. an A-loT service provider) to send the encrypted device ID. Such "routing information" may be obtained from, for example, some grouping information such as group ID to identify a 3rd party. For example, such "routing information" may be obtained from a partial device ID, which may be decrypted at CN to identify a 3rd party.

In step 5 of the eleventh exemplary implementation, the CN function entity transmits the encrypted device ID to the 3^{rd} party. The 3^{rd} party decrypts the device ID and manages a mapping between encrypted and decrypted Device ID. For example, the mapping between the encrypted and decrypted Device ID may be performed similar as for the mapping of the AS-level ID and the encrypted device ID in the reader. Moreover, the 3^{rd} party may verify the A-loT device ID in a device authentication in step 7 of the eleventh exemplary implementation. In general, device ID decryption and device authentication may be performed in the same or separate function entities.

After decryption, the 3^{rd} party provides a result of the authentication to the reader via the core network function entity in steps 8 and 9 of the eleventh exemplary implementation. After obtaining the authentication result, the reader can update the mapping between the encrypted device ID and the AS-level ID in step 10 of the eleventh exemplary implementation. For example, if the device fails authentication, the already allocated AS-level ID may be marked as invalid and will not be used for Reader-Device communication.

Similar to any of the eighth, the ninth, or the tenth exemplary implementation, the device ID decryption and device authentication may be performed after AS-level ID is assigned (as shown in Fig. 17), or alternatively during the procedure of AS-level assignment. In former case, if authentication fails, the assigned AS-level ID will be abandoned (in the updating of the mapping). In latter case, the AS-level ID is assigned only after a successful authentication.

In the eleventh exemplary implementation, for service request and response in steps 11 and 17, respectively, the encrypted A-loT device ID may be used between CN and 3^{rd} party. Moreover, for service request and response in steps 13 and 15, respectively, the encrypted device ID may be used between CN function entity and reader. Furthermore, for service request and response in step 14, the AS-level ID may be used between A-loT device and reader. The service request and response may be performed similar as in any of the eight to tenth exemplary implementations. For service request and response, the eleventh exemplary implementation includes step 12 for validating the 3^{rd} party by the CN function entity after receiving a service request including the A-loT encrypted device ID in step 11. Moreover, the CN function entity decides on a corresponding 3^{rd} party in step 16, after receiving a service response including an encrypted device ID in step 15. After the decision on a 3^{rd} party, the CN function entity forwards the service response including an encrypted device ID to the 3^{rd} party in step 17. After CN receives service request with encrypted A-loT device ID, CN needs to know the corresponding 3rd party in order to complete service authorization (see step 12). The same methods as mentioned above (e.g. group ID or partial device ID) may be used to identify a 3rd party. The same applies to step 16 after CN receives service response from reader.

Although Figs. 7 to 17 refer to an AS-level ID, the present disclosure is not limited thereto. In general the exemplary implementations according to Figs. 7 to 17 may be performed for any temporary ID.

### (Life Time of AS-level ID)

As already mentioned A-loT devices fulfill certain low-power and/or low complexity restrictions. For example, the temporary ID assigned in a 2-step RA or in a 4-step RA may be forgotten after a life time (time period) of the temporary ID has expired.

Depending on type of A-loT devices, the life time of the temporary ID may be:
- Type-1: after "sustainable operation time" (which is a predetermined time period) expires, the temporary ID is forgotten by A-loT device. For example, if the temporary ID is stored in volatile memory, the temporary ID is forgotten in case the A-loT device runs out of power. For example, a A-loT device may not have the ability to write into non-volatile memory on-the-fly due to power/complexity restriction.
   For example, a sustainable operation time may be defined using a timer. After A-loT paging or A-loT Msg1 of A-loT RA, the timer starts. Before timer expires, the device may receive R2D or transmit D2R (device-to-reader). After timer expires, R2D/D2R are not possible. The content of volatile memory is lost.
   For example, a sustainable operation time may be defined using a normalized energy value. After A-loT paging or A-loT Msg1 of A-loT RA, the normalized energy value starts to decrease. Depending on type of operation (such as D2R or R2D), a different amount of energy will be reduced. After the normalized energy value is zero, R2D/D2R are not possible. The content of volatile memory is lost.
- Type-2: AS-level ID may be kept in device longer than sustainable operation time. For example, the temporary ID may be stored in a volatile memory but with separate energy storage (e.g. a capacitor) to keep the energy longer than energy storage for sustainable operation. For example, a A-loT device may have a separate capacitor for energy backup.
- Type-3: AS-level ID is always kept by device once assigned. For example, the temporary ID may be stored in non-volatile memory.

For a Type-1 A-IoT device, the reader may check whether a A-loT device is still within sustainable operation time. If the A-loT device is not within the sustainable operation time, the reader may re-start the AS-level assigning process as defined in any of the examples and exemplary implementations above.

For a Type-2 A-loT device (or Type-1 without the reader checking sustainable operation time), the reader may not be aware about the temporary ID availability at the A-loT device. The reader may try to page the device using assigned temporary ID. If the device cannot be reached, the reader may re-start the temporary ID assigning process as defined in any of the examples and exemplary implementations above. Alternatively, the A-loT device may report the temporary ID sustainable operation time and the reader may keep such a value.

In the mapping table maintained by Reader, a bit field may be included for each temporary ID to represent the type of the ID (such as type-1, type-2 with or without device reported value, type-3).

In other words, the reader may assign a life-time indication to the temporary ID, the life-time indication indicates an expiration of the temporary ID. The life-time indication may be, for example, a sequence of bits. Such a life-time indication may be stored in a bit filed in the mapping table.

In the mapping table maintained by the reader, a status flag may be kept for each received (encrypted) device ID to represent whether the device has been authenticated or not. This facilitates skipping the authentication process if reader re-starts the temporary ID assigning process.

In other words, the reader may assign an authentication indication to the temporary ID, the authentication indication indicates whether the A-loT device has been authenticated or not. The authentication indication may be, for example, a status flag. Such an authentication indication may be stored, for example, in the mapping table.

Alternatively, the reader may check whether there is already an assigned temporary ID after receiving an (encrypted) device ID in A-loT Msg3 or A-loT Msg1. If a temporary ID has been assigned before, it means that the A-loT device has been authenticated.

Such a life-time of the temporary ID as well as any of the above-described management methods for a life-time may be combined with any of the above-mentioned examples and exemplary implementations, in particular any of the first to seventh exemplary implementations for assigning a temporary ID and any of the eighth to eleventh exemplary implementations for authenticating an A-loT device.

### Further implementations

As mentioned above, some A-loT devices have a limited energy capacity. The energy could be obtained from the environment (vibration, light, heat) or a carrier wave, e.g., provided by the gNB/intermediate node. The A-loT device may not have the legacy RRC states, ARQ, and HARQ. It may implement, e.g. repetitions to increase robustness.

The A-loT device has a limited power energy; hence it may not be able to communicate at any time instance, with the desired transmission power, and with maximum allowed message size. In addition, the A-loT device may be defined/configured with various states, such as, power OFF, charging, communication, and sleep. The A-loT device may not be able to communicate in all these states. To facilitate the communication considering the mentioned limitations, the A-loT may signal relevant information for the subsequent data transmission(s) -uplink and/or downlink.

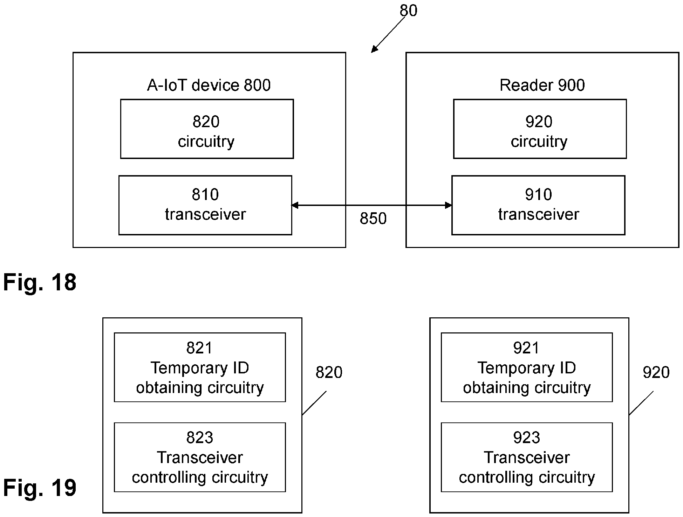

**Fig. 18** illustrates a general, simplified and exemplary block diagram of an A-loT device 800 and a reader (user equipment, base station or intermediate node connected to a base station) 900 forming a communication system 80. The A-loT device 800 may be a wearable, smart home device, automotive device, sensor, smart key, or healthcare device, for example.

The A-loT device 800 and the reader 900 (eNB/gNB) are communicating with each other over a (wireless) physical channel 850, respectively, using their transceivers 810 (A-loT side) and 910 (reader side). The reader 900 and the A-loT device 800 are capable of transmitting as well as receiving radio signals via the channel 850. Together, the reader 900 and the A-loT device 800 form a communication system 80, for example, a 5G or future communication system. The communication system 80 may further include other entities such as further readers, base stations, intermediate nodes and/or A-loT devices. Any of the above-described embodiments may be implemented in the A-loT device 800, the reader 900 and/or communication system 80 where appropriate.

The A-loT device 800 comprises a transceiver 810 and a (processing) circuitry 820, and the reader 900 comprises a transceiver 910 and a (processing) circuitry 920. The transceiver 810, 910 in turn comprise and/or function as a receiver and/or a transmitter.

In this disclosure, in other words, the term "transceiver" is used for hardware and/or software components that allow the A-loT device 800, and the reader 900 to transmit and/or receive radio signals over the wireless channel 850, for example, a physical channel. Moreover, the term "circuitry" includes processing circuitry formed by one or more processors or processing units, etc.

In some embodiments, the transceiver 810 of the A-loT device 800 receives a paging message; and transmits a first message including an identifier indication for the A-loT device to the reader 900.

In some embodiments, the transceiver 910 of the reader 900 transmits a paging message to the A-loT device 800, and receives a first message from the A-loT device 800, the first message including an identifier indication for the A-loT device 800.

The circuitry may be configured by software to perform the functions as described in any of the above embodiments. As shown in **Fig. 19****,** the circuitry 820 of the A-loT device may further comprise a functional module referred to as temporary ID obtaining circuitry 821 for generating the indication. A transceiver controlling circuitry 823 is a functional module that controls the transceiver to receive a paging message and/or to transmit a first message including an identifier indication. Moreover, as shown in Fig. 19, the circuitry 920 of the reader may further comprise a functional module referred to as temporary ID obtaining circuitry 921 for obtaining and/or generating the temporary ID. A transceiver controlling circuitry 923 is a functional module that controls the transceiver to transmit the paging message and/or receive the first message including the identifier indication.

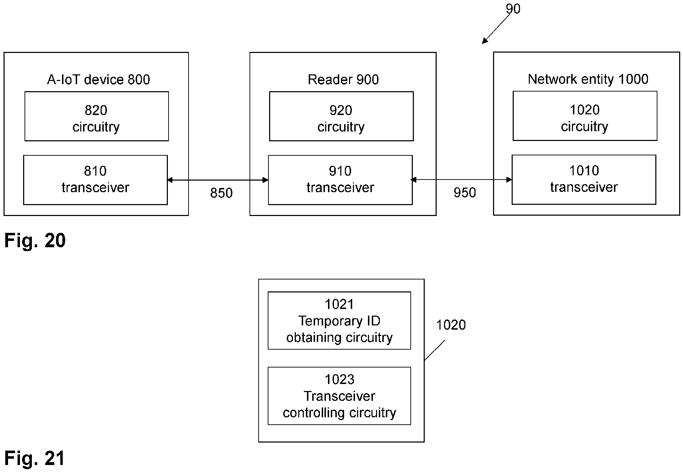

**Fig. 20** illustrates another general, simplified and exemplary block diagram of an A-loT device 800, a reader (user equipment, base station or intermediate node connected to a base station) 900, and a network entity (e.g. base station or core network function entity) forming a communication system 90. The A-loT device 800 may configured analogously as the A-loT device described for Fig. 18 above. The reader 900 may configured analogously as the reader described for Fig. 18 above.

In addition, to the properties ad described with respect to Figs. 18 and 19, the reader 900 and the network entity 1000 are communicating with each other over a (wireless) physical channel 950, respectively, using their transceivers 910 (reader side) and 1010 (network entity side). The reader 900 and the network entity 1000 are capable of transmitting as well as receiving radio signals via the channel 850. Together, the A-loT device 800, the reader 900, and the network entity 800 form a communication system 90, for example, a 5G or future communication system. The communication system 80 may further include other entities such as further readers, base stations, intermediate nodes and/or A-loT devices. Any of the above-described embodiments may be implemented in the A-loT device 800, the reader 900, the network entity 1000 and/or communication system 90 where appropriate.

The network entity 1000 comprises a transceiver 1010 and a (processing) circuitry 1020. The transceiver 1010 in turn comprise and/or function as a receiver and/or a transmitter.

In some embodiments, the transceiver 1010 of the network entity 1000 receives an encrypted device identifier of an A-loT device from a reader device.

The circuitry may be configured by software to perform the functions as described in any of the above embodiments. As shown in **Fig. 21****,** the circuitry 1020 of the network entity may further comprise a functional module referred to as temporary ID obtaining circuitry 1021 for generating the temporary ID. A transceiver controlling circuitry 1023 is a functional module that controls the transceiver to receive receives an encrypted device identifier of an A-loT device from a reader device. The transceiver may be further controlled to transmit the temporary ID to the reader device.

Moreover, it is noted that the A-loT device as described in any of the above embodiments and examples, may be integrated on an integrated circuit (IS). Moreover, the integration does not necessary include the entire transceiver. The transceiver is, in general, not necessarily a part of the A-loT device. The A-loT may be connected to an external antenna (module) connected to the A-loT over a port on the A-loT device. Similar structure applies to the gNB.

Moreover, a computer program is provided including code instructions stored on a non-transitory medium, which when executed on one or more processor, causes the one or more processors to execute a method according to any of the above mentioned embodiments and examples.

### Core network functionalities in 5G

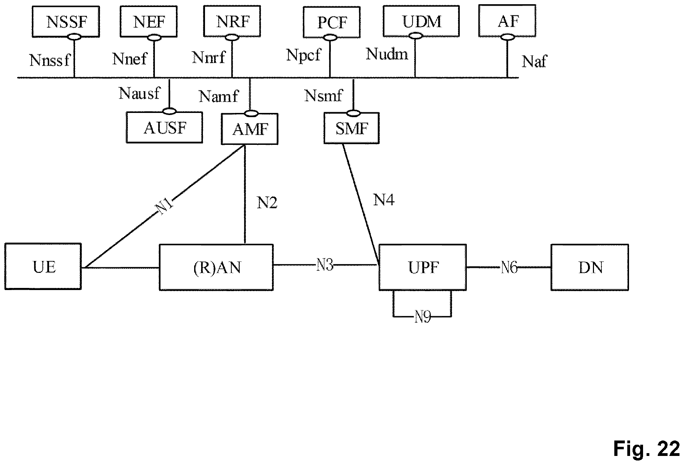

**Fig. 22** illustrates a 5G NR non-roaming reference architecture (see e.g., 3GPP TS 23.501 e.g., v16.9.0, section 4.2.3, see also v17.5.0 or v18.0.0). An Application Function (AF), e.g., an external application server hosting 5G services, interacts with the 3GPP Core Network in order to provide services, for example to support application influence on traffic routing, accessing Network Exposure Function (NEF) or interacting with the Policy framework for policy control (see Policy Control Function, PCF), e.g., QoS control. Based on operator deployment, Application Functions considered to be trusted by the operator can be allowed to interact directly with relevant Network Functions. Application Functions not allowed by the operator to access directly the Network Functions use the external exposure framework via the NEF to interact with relevant Network Functions.

Fig. 22 shows further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN), e.g., operator services, Internet access or 3rd party services. All of or a part of the core network functions and the application services may be deployed and running on cloud computing environments.

### RRC connection setup and reconfiguration procedures

Interactions between a UE, gNB, and AMF (an 5GC entity) in the context of a transition of the UE from RRC_IDLE to RRC_CONNECTED for the NAS part are described (see TS 38.300 v15.6.0).

RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signaling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for example AMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element to the UE via the signaling radio bearer. The UE then performs an uplink transmission or a downlink reception based on the resource allocation configuration.

### QoS Control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so), e.g. as shown above with reference to Fig. 3. The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

### (Open-RAN)

The base station described in each exemplary embodiment (for example, a 5G NR base station called gNB) may be formed of three functional modules: Centralized Unit (CU), Distributed Unit (DU), and Radio Unit (RU).

CU may also be referred as, for example, a centralized node, an aggregated node, a centralized station, an aggregated station, or a central unit. DU may also be referred as, for example, O-DU (O-RAN Distributed Unit), a distributed node, a distributed station, or a distributed unit. RU may also be referred as, for example, O-RU (O-RAN Radio Unit), a radio apparatus, a radio node, a radio station, an antenna unit, or a radio unit.

Several split options are defined for the functional split configuration (or functional split point) between CU, DU, and RU. The term "functional split point" may also be referred to as "split", "option", or "split option".

Examples of the "split option" include the following split options 1 to 8. The functionality of the base station described in each exemplary embodiment may be split into functions as CU, DU, and RU by one of the following split options 1 to 8. For example, each of CU, DU, and RU may be subjected to functional splitting or functional splitting only between CU and DU or only between DU and RU is possible.
(1) Split Option 1: between RRC (radio resource control) and PDCP
(2) Split Option 2: between PDCP and RLC (High-RLC)
(3) Split Option 3: between High-RLC and Low-RLC
(4) Split Option 4: between RLC (Low-RLC) and MAC (High-MAC)
(5) Split Option 5: between High-MAC and Low-MAC
(6) Split Option 6: between MAC (Low-MAC) and PHY (High-PHY)
(7) Split Option 7: between High-PHY and Low-PHY
(8) Split Option 8: between PHY (Low-PHY) and RF

The functional split point between CU and O-DU may be Split Option 2. The link between CU and O-DU is referred to as midhaul and the F1 interface is defined by the 3GPP. Further, the link between O-DU and O-RU is referred to as fronthaul and its functional split point may be Split Option 7-2x adopted as the O-RAN fronthaul specifications.

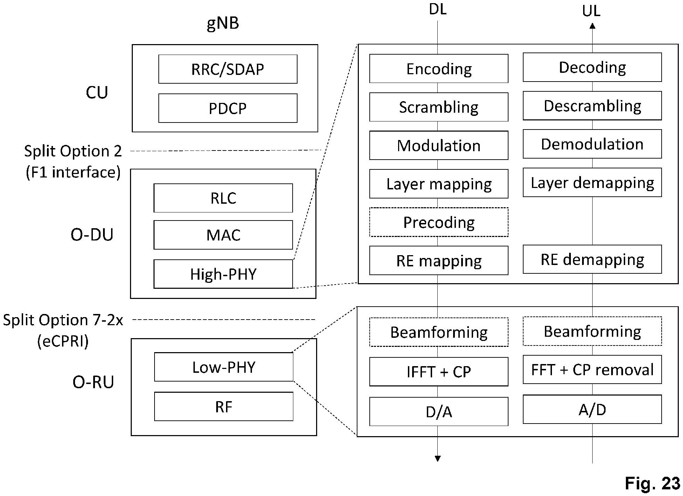

**Fig. 23** illustrates an example in which the base station functionality of the gNB is subjected to functional splitting into CU, O-DU, O-RU by Split Option 2 and Split Option 7-2x.

CU may include, for example, an RRC (radio resource control) function, an SDAP (service data adaptation protocol) function, and a PDCP (packet data convergence protocol) function.

O-DU may include, for example, an RLC (radio link control) function, a MAC function, and a higher physical layer (HIGH-PHY) function. Further, the HIGH-PHY function may include an encoding function, a scrambling function, a modulation function, a layer mapping function, a precoding function, and an RE (resource element) mapping function for downlink (DL) transmission. The HIGH-PHY function may also include a decoding function, a descrambling function, a demodulation function, a layer demapping function, and an RE (resource element) demapping function for uplink (UL) reception.

O-RU may include, for example, a LOW-PHY function and an RF function. Further, the LOW-PHY function may include a beamforming function, IFFT (Inverse Fast Fourier Transform) + CP (Cyclic Prefix) addition functions, and a D/A (Digital to Analog) conversion function for downlink transmission. Further, the LOW-PHY function may include an A/D (Analog to Digital) conversion function, CP removal + FFT (Fast Fourier Transform) functions, and a beamforming function for uplink reception.

Note that, in a case where O-DU does not include the precoding function, O-RU may include the precoding function.

O-RU may include an LBT (listen before Talk)-related function.

eCPRI (Evolved Common Public Radio Interface) is defined as a communication scheme between O-DU and O-RU in Split Option 7-2x.

In Split Option 7-2x, a sampling sequence of the in-phase (I) and quadrature (Q) components of an OFDM signal in the frequency domain as well as information used for beamforming in the antenna, a time synchronization signal, and the like are transmitted and received by eCPRI.

Information transmitted by signals (PDCCH, PUCCH, PDSCH, PUSCH, MAC CE, RRC, and the like) described in each exemplary embodiment may be transmitted by using the User Plane (U-Plan) or Control Plane (C-Plane) of eCPRI between O-DU and O-RU.

In a case where a function described in each exemplary embodiment is executed in O-RU by function splitting, O-DU may control O-RU by transmitting information for controlling the function by means of a control signal (for example, eCPRI) between O-DU and O-RU.

In a case where a function described in each exemplary embodiment is executed by function splitting in O-DU, O-RU may receive a result of the execution of the function in O-DU by means of a control signal (for example, eCPRI) and may control O-RU based on the received result.

CU, O-DU, and O-RU may be deployed in physically different apparatuses, the respective functions of which are connected by optical fibers or the like, or some or all of the functions may be deployed in a physically identical apparatus.

CU and O-DU may be logical entities implemented as software operating on a server, such as a cloud, as a virtual Radio Access Network (vRAN). Further, some or all of the functions of CU and O-DU may be provided as services of a Network Functions Virtualization (NFV) function.

The transceiver may not be a radio transceiver and may be, for example, a network transceiver, an optical transceiver, or the like. The radio resource allocated by O-DU may be a resource for radio communication between O-RU and the UE.

### (Subband non-overlapping full duplex - SBFD)

Operations on uplink, downlink, and sidelink symbols in one exemplary embodiment of the present disclosure may be applied to symbols (for example, SBFD (Subband non-overlapping full duplex) symbols, Subband full duplex) on which an SBFD operation or control is performed. For SBFD symbols, the frequency domain (or frequency resource or frequency bandwidth) is divided into a plurality of frequency domains (also referred to as, for example, sub-bands, RB sets, sub-bandwidths, or sub-BWPs (Bandwidth parts)). The terminal performs transmission and reception in a direction (for example, a downlink or uplink direction) in units of sub-bands that are the divided domains. For SBFD symbols, the terminal may perform transmission/reception in one direction of uplink and downlink directions, and may not perform transmission/reception in the other direction. The base station, on the other hand, may be capable of performing both uplink and downlink transmissions/receptions simultaneously. SBFD symbols may have a fewer frequency domain usable for downlink compared to symbols for which only downlink transmission/reception is performed. Further, SBFD symbols may have a fewer frequency domain usable for uplink compared to symbol for which only uplink transmission/reception is performed.

Further, for SBFD symbols, the terminal may perform uplink and downlink transmissions/receptions simultaneously. At this time, the frequency domain transmitted by the terminal and the frequency domain received by the terminal may not be adjacent and a frequency interval (also referred to as a frequency gap) may be provided therebetween.

Further, sidelink transmission/reception may also be included as a transmission/reception direction in units of sub-bands which are the divided domains.

### (XDD - Cross Division Duplex)

Operations on uplink, downlink, and sidelink symbols in one exemplary embodiment of the present disclosure may be applied to symbols (for example, Full duplex symbols) on which a Full duplex operation or control is performed. For Full duplex symbols, both the terminal and the base station are capable of performing uplink and downlink transmissions/receptions simultaneously. For Full duplex symbols, the terminal and the base station may operate to perform transmission/reception simultaneously in available frequency domains (or frequency resources or frequency bandwidths) or may operate to perform transmission/reception simultaneously in one or some of frequency domains (that is, may operate to perform transmission or reception in the other frequency domains). At this time, the frequency domain transmitted by the base station or the terminal and the frequency domain received by the base station or the terminal may not be adjacent and a frequency interval (also referred to as a frequency gap) may be provided therebetween. Further, for example, for the purpose of reduction in interference or the like, one of the terminal and the base station may operate to perform transmission/reception simultaneously (that is, the other may operate to perform transmission or reception).

Further, the Full duplex operation may be applied to an operation in which the terminal is capable of performing sidelink transmission/reception simultaneously. Further, the Full duplex operation may be applied to an operation in which the terminal is capable of performing sidelink transmission/reception and uplink or downlink transmission/reception simultaneously.

### (Control Signals)

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sidelink control information (SCI) or the 2nd stage SCI.

### (Base Station)

In the present disclosure, the base station may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in side link communication, a terminal may be adopted instead of a base station. The base station may be a relay apparatus that relays communication between a higher node and a terminal. The base station may be a roadside unit as well.

### (User Equipment)

A *terminal* or *user terminal* or *user device* or *mobile station* or *mobile node* is referred to in the LTE and NR as a *user equipment (UE).* This may be a mobile device or communication apparatus/device such as a wireless phone, smartphone, tablet computer, or an USB (universal serial bus) stick with the functionality of a user equipment. However, the term mobile device is not limited thereto, in general, a relay may also have functionality of such mobile device, and a mobile device may also work as a relay. For instance, a terminal is a physical entity (physical node) within a communication network. Still further, the communication device may be any machine-type communication device, such as loT device or the like. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

### (Uplink/Downlink/Sidelink)

The present disclosure may be applied to any of uplink, downlink and sidelink.

The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

### (Data Channels/Control Channels)

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

### (Reference Signals)

In the present disclosure, the reference signals are signals known to both a base station and a mobile station and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

### (Time Intervals)

In the present disclosure, time resource units are not limited to one or a combination of slots and symbols, and may be time resource units, such as frames, superframes, subframes, slots, time slots, subslots, minislots, or time resource units, such as symbols, Orthogonal Frequency Division Multiplexing (OFDM) symbols, Single Carrier-Frequency Division Multiple Access (SC-FDMA) symbols, or other time resource units. The number of symbols included in one slot is not limited to any number of symbols exemplified in the embodiment(s) described above, and may be other numbers of symbols.

### (Frequency Bands)

The present disclosure may be applied to any of a licensed band and an unlicensed band.

### (Communication)

The present disclosure may be applied to any of communication between a base station and a terminal (Uu-link communication), communication between a terminal and a terminal (Sidelink communication), and Vehicle to Everything (V2X) communication. The channels in the present disclosure may be replaced with PSCCH, PSSCH, Physical Sidelink Feedback Channel (PSFCH), PSBCH, PDCCH, PUCCH, PDSCH, PUSCH, and PBCH.

In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

### (Antenna Ports)

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

Further, the various embodiments may also be implemented by means of software modules, which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc. It should be further noted that the individual features of the different embodiments may individually or in arbitrary combination be subject matter to another embodiment.

It would be appreciated by a person skilled in the art that numerous variations and/or modifications may be made to the present disclosure as shown in the specific embodiments. The present embodiments are, therefore, to be considered in all respects to be illustrative and not restrictive.

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

### Further Aspects

Aspect 1: An ambient Internet of Things, A-loT, device, comprising: a transceiver, which in operation: receives a paging message; transmits a first message including an identifier indication for the A-loT device; and circuitry, which in operation: obtains, based on the identifier indication, a temporary identifier, ID, for the A-loT device.

Aspect 2: The A-loT device according to aspect 1, wherein the transceiver, in operation, further receives a second message, the second message including the identifier indication.

Aspect 3: The A-loT device according to any of the aspects 1 or 2, wherein, the transceiver, in operation, upon receiving the second message, transmits a third message, the third message including a device identifier of the A-loT device.

Aspect 4: The A-loT device according to aspect 3, wherein the device identifier of the A-loT device is an encrypted device identifier; and the circuity, in operation, further obtains the encrypted device identifier of the A-loT device, before the transmitter, in operation, transmits the third message.

Aspect 5: The A-loT device according to any of the aspects 1 to 4, wherein the transceiver, in operation, further receives a fourth message, the fourth message including at least a part of the temporary ID.

Aspect 6: The A-loT device according to any of the aspects 1 to 4, wherein the obtaining of the temporary ID includes using the identifier indication as temporary ID.

Aspect 7: The A-loT device according to any of the aspects 1 or 2, wherein the first message further includes a device identifier of the A-loT device.

Aspect 8: The A-loT device according to aspect 7, wherein the device identifier of the A-loT device is an encrypted device identifier; and the circuity, in operation, further obtains the encrypted device identifier of the A-loT device, before the transmitter, in operation, transmits the first message.

Aspect 9: The A-loT device according to any of the aspects 7 or 8, wherein the second message further includes at least a part of the temporary ID; and the obtaining of the temporary ID includes, upon receiving the second message, obtaining, based on the identifier indication included in the second message, the temporary ID from the second message.

Aspect 10: The A-loT device according to any of the aspects 7 or 8, wherein the obtaining of the temporary ID includes using the identifier indication as temporary ID.

Aspect 11: A reader device for an ambient Internet of Things, A-loT, device, comprising: a transceiver, which in operation: transmits a paging message to the A-loT device; receives a first message from the A-loT device, the first message including an identifier indication for the A-loT device; and circuitry, which in operation: obtains, based on the received first message, a temporary identifier, ID, for the A-loT device.

Aspect 12: The reader device according to aspect 11, wherein the transceiver, in operation, further transmits a second message to the A-loT device, the second message including the received identifier indication.

Aspect 13: The reader device according to any of the aspects 11 or 12, wherein, the transceiver, in operation, receives a third message from the A-loT device after the transmission of the second message, the third message including a device identifier of the A-loT device

Aspect 14: The reader device according to aspect 13, wherein the transceiver, in operation, after receiving the third message, further transmits a fourth message to the A-loT device, the fourth message including at least a part of the obtained temporary ID.

Aspect 15: The reader device according to any of the aspects 11 or 12, wherein the first message further includes a device identifier of the A-loT device.

Aspect 16: The reader device according to aspect 15, wherein the second message further includes at least a part of the temporary ID.

Aspect 17: The reader device according to any of the aspects 11 to 16, wherein the obtaining of the temporary ID for the A-loT device includes transmitting the device identifier to a base station; and receiving from the base station the temporary ID for the A-loT device.

Aspect 18: The reader device according to any of the aspects 11 to 16, wherein the obtaining of the temporary ID for the A-loT device includes transmitting the device identifier to a core network, CN, function entity, and receiving, from the CN function entity, the temporary ID for the A-loT device.

Aspect 19: The reader device according to any of the aspects 13 to 18, wherein the circuitry, in operation, after receiving the device identifier, performs an authentication, including providing the device identifier to an authentication network entity, and receiving an authentication result from the authentication network entity; and performs a mapping between the device identifier and the obtained temporary ID based on the authentication result.

Aspect 20: The reader device according to any of the aspects 13 to 19, wherein the device identifier of the A-loT device is an encrypted device identifier.

Aspect 21: The reader device according to aspect 20, wherein the circuitry, in operation, after receiving the device identifier, performs a mapping between the encrypted device identifier and the obtained temporary ID; performs an authentication, including providing the encrypted device identifier to an authentication network entity, and receiving an authentication result from the authentication network entity; and updates the mapping between the encrypted device identifier and the obtained temporary ID based on the authentication result.

Aspect 22: The reader device according to aspect 20, wherein the circuitry, in operation, after receiving the device identifier, performs a mapping between the encrypted device identifier and the obtained temporary ID; performs an authentication, including decrypting the encrypted device identifier, providing the decrypted device identifier to an authentication network entity, and receiving an authentication result from the authentication network entity; and performs the mapping between the decrypted device identifier and the obtained temporary ID based on the authentication result.

Aspect 23: The reader device according to any of the aspects 11 to 22, wherein the transceiver, in operation, further transmits a service request to the A-loT device; and receives a service response from the A-loT device.

Aspect 24: The reader device according to any of the aspects 11 to 23, wherein the circuitry, in operation, further assigns a life-time indication to the temporary ID, the life-time indication indicates an expiration of the temporary ID.

Aspect 25: The reader device according to any of the aspects 11 to 24, wherein the circuitry, in operation, further assigns an authentication indication to the temporary ID, the authentication indication indicates whether the A-loT device has been authenticated or not.

Aspect 26: A network entity comprising: a transceiver, which in operation: receives an encrypted device identifier of an A-loT device from a reader device; and circuitry, which in operation: generates, upon receiving the encrypted device identifier, a temporary identifier, ID, for the A-loT device; and the transceiver, in operation, further transmits the temporary ID to the reader device.

Aspect 27: The network entity according to aspect 25, wherein, upon receiving the encrypted device identifier, the circuity, in operation, performs an authentication, including obtain an authentication result based on a decrypted device identifier, transmitting an authentication result to the reader device.

Aspect 28: The network entity according to aspect 27, wherein the obtaining of the authentication result includes decrypting the encrypted device identifier.

Aspect 29: The network entity according to any of the aspects 26 to 28, wherein the network entity is a base station or a core network function entity.

Aspect 30: A method for an A-loT device for obtaining a temporary identifier for the A-loT device, the method comprising: receiving a paging message; transmitting a first message including an identifier indication for the A-loT device, and obtaining, based on the identifier indication, a temporary identifier, ID, for the A-loT device.

Aspect 31: A method for a reader device for obtaining a temporary identifier for an A-loT device, the method comprising: transmitting a paging message to the A-loT device; receiving a first message from the A-loT device, the first message including an identifier indication for the A-loT device, and obtaining, based on the received first message, a temporary identifier, ID, for the A-loT device.

Aspect 32: A method for a network entity for obtaining a temporary identifier for an A-loT device, the method comprising: receiving an encrypted device identifier of an A-loT device from a reader device; generating, upon receiving the encrypted device identifier, a temporary identifier, ID, for the A-loT device, and transmitting the temporary ID to the reader device.

Aspect 33: An integrated circuit, which in operation, controls a process of an A-loT device, the process comprising the following steps performed by the A-loT device: receiving a paging message; transmitting a first message including an identifier indication for the A-loT device, and obtaining, based on the identifier indication, a temporary identifier, ID, for the A-loT device.

Aspect 34: An integrated circuit, which in operation, controls a process of a reader device, the process comprising the following steps performed by the reader device: transmitting a paging message to the A-loT device; receiving a first message from the A-loT device, the first message including an identifier indication for the A-loT device, and obtaining, based on the received first message, a temporary identifier, ID, for the A-loT device.

Aspect 35: An integrated circuit, which in operation, controls a process of a network entity, the process comprising the following steps performed by the network entity: receiving an encrypted device identifier of an A-loT device from a reader device; generating, upon receiving the encrypted device identifier, a temporary identifier, ID, for the A-loT device, and transmitting the temporary ID to the reader device.

Aspect 36: A program stored on a storage medium and including code instructions, which, when executed on one or more processors of an A-loT device, cause the one or more processors to execute the following steps: receiving a paging message; transmitting a first message including an identifier indication for the A-loT device, and obtaining, based on the identifier indication, a temporary identifier, ID, for the A-loT device.

Aspect 37: A program stored on a storage medium and including code instructions, which, when executed on one or more processors of a reader device, cause the one or more processors to execute the following steps: transmitting a paging message to the A-loT device; receiving a first message from the A-loT device, the first message including an identifier indication for the A-loT device, and obtaining, based on the received first message, a temporary identifier, ID, for the A-loT device.

Aspect 38: A program stored on a storage medium and including code instructions, which, when executed on one or more processors of a network entity, cause the one or more processors to execute the following steps: receiving an encrypted device identifier of an A-loT device from a reader device; generating, upon receiving the encrypted device identifier, a temporary identifier, ID, for the A-loT device, and transmitting the temporary ID to the reader device.

Summarizing, the disclosure relates to an ambient Internet of Things (A-loT) device, a reader device, a network entity, and respective methods for an A-loT device, a reader device, and a network entity. More specifically, the A-loT device comprises a transceiver and a circuitry. The transceiver, in operation, receives a paging message; transmits a first message including an identifier indication for the A-loT device. The circuitry, in operation, obtains, based on the identifier indication, a temporary identifier, ID, for the A-loT device.

## Claims

1. An ambient Internet of Things, A-loT, device, comprising:
a transceiver, which in operation:
receives a paging message;
transmits a first message including an identifier indication for the A-loT device;
circuitry, which in operation:
obtains, based on the identifier indication, a temporary identifier, ID, for the A-loT device.

2. The A-loT device according to claim 1, wherein the transceiver, in operation, further receives a second message, the second message including the identifier indication.

3. The A-loT device according to any of the claims 1 or 2, wherein, the transceiver, in operation, upon receiving the second message, transmits a third message, the third message including a device identifier of the A-loT device.

4. The A-loT device according to claim 3, wherein the device identifier of the A-loT device is an encrypted device identifier; and the circuity, in operation, further obtains the encrypted device identifier of the A-loT device, before the transmitter, in operation, transmits the third message.

5. The A-loT device according to any of the claims 1 to 4, wherein the transceiver, in operation, further receives a fourth message, the fourth message including at least a part of the temporary ID; or
wherein the obtaining of the temporary ID includes using the identifier indication as temporary ID.

6. The A-loT device according to any of the claims 1 or 2, wherein the first message further includes a device identifier of the A-loT device.

7. The A-loT device according to claim 6, wherein the device identifier of the A-loT device is an encrypted device identifier; and the circuity, in operation, further obtains the encrypted device identifier of the A-loT device, before the transmitter, in operation, transmits the first message.

8. The A-loT device according to any of the claims 6 or 7, wherein the second message further includes at least a part of the temporary ID; and the obtaining of the temporary ID includes, upon receiving the second message, obtaining, based on the identifier indication included in the second message, the temporary ID from the second message.

9. The A-loT device according to any of the claims 6 or 7, wherein the obtaining of the temporary ID includes using the identifier indication as temporary ID.

10. A reader device for an ambient Internet of Things, A-loT, device, comprising:
a transceiver, which in operation:
transmits a paging message to the A-loT device;
receives a first message from the A-loT device, the first message including an identifier indication for the A-loT device;
circuitry, which in operation:
obtains, based on the received first message, a temporary identifier, ID, for the A-loT device.

11. The reader device according to claim 10, wherein the circuitry, in operation, further receives a device identifier of the A-loT device that is included
- in the first message, or
- another message that is received from the A-loT device.

12. The reader device according to any of the claims 10 to 11, wherein the obtaining of the temporary ID for the A-loT device includes
generating the temporary ID for the A-loT device;
or
transmitting the device identifier to a base station,
receiving from the base station the temporary ID for the A-loT device;
or
transmitting the device identifier to a core network, CN, function entity,
receiving, from the CN function entity, the temporary ID for the A-loT device.

13. The reader device according to any of the claims 10 to 12, wherein the device identifier of the A-loT device is an encrypted device identifier;
wherein the circuitry, in operation, after receiving the device identifier,
performs a mapping between the encrypted device identifier and the obtained temporary ID,
performs an authentication, including
providing the encrypted device identifier to an authentication network entity,
receiving an authentication result from the authentication network entity; and
updates the mapping between the encrypted device identifier and the obtained temporary ID based on the authentication result.

14. The reader device according to any of the claims 10 to 13, wherein the circuitry, in operation, further assigns a life-time indication to the temporary ID, the life-time indication indicates an expiration of the temporary ID.

15. A network entity comprising:
a transceiver, which in operation:
receives an encrypted device identifier of an A-loT device from a reader device;
circuitry, which in operation:
generates, upon receiving the encrypted device identifier, a temporary identifier, ID, for the A-loT device; and
the transceiver, in operation, further
transmits the temporary ID to the reader device.
